# EUROPÄISCHE PATENTSCHRIFT

(11) **EP 3 797 984 B1**
(45) Veröffentlichungstag und Bekanntmachung des Hinweises auf die Patenterteilung: **03.04.2024**
(21) Anmeldenummer: 20196307.1
(22) Anmeldetag: 15.09.2020
(51) Int. Cl.: B32B 3/10, B27D 1/04, B27M 3/00, B32B 7/03, B32B 7/12, B32B 21/04, B32B 21/13, E04B 1/10, E04C 2/12

(54) **VERFAHREN ZUR HERSTELLUNG EINES HOLZBAUELEMENTES SOWIE HOLZBAUELEMENT**
WOODEN ELEMENT AND METHOD OF PRODUCING A WOODEN ELEMENT
PROCÉDÉ DE FABRICATION D'UN ÉLÉMENT DE CONSTRUCTION EN BOIS AINSI QU'ÉLÉMENT DE CONSTRUCTION EN BOIS

(30) Priorität: 24.09.2019 DE 102019125608
(43) Veröffentlichungstag der Anmeldung: 31.03.2021
(73) Patentinhaber: PaTim UG (haftungsbeschränkt), 73499 Wört (DE)
(72) Erfinder: Rister, Richard, 91550 Dinkelsbühl (DE)
(74) Vertreter: DTS Patent- und Rechtsanwälte Schnekenbühl und Partner mbB

(56) Entgegenhaltungen:
- EP-A1- 3 127 669
- EP-B1- 2 251 168
- DE-A1-102015 000 495
- DE-B3-102016 113 132
- DE-U1-202016 007 023

## Beschreibung

Die vorliegende Erfindung betrifft ein Verfahren zur Herstellung eines Holzbauelementes.

Holzbauelemente sind bereits aus dem Stand der Technik bekannt.

In der Offenlegungsschrift DE3908851A1 ist ein Verfahren beschrieben, bei dem die Platten mit einer Deckschicht aus durchgehenden Lamellenlagen besteht wie sie im Stand der Technik hergestellt werden. Die durchgehenden Lamellen bedeuten ein aufwendiges Sortieren solcher Schnitthölzer oder eine Keilzinkung.

In der Patentschrift CH664185A5 ist grundlegend der gleiche Produktionsvorgang beschrieben wie in der Offenlegungsschrift DE3908851A1.

Im Gebrauchsmuster G8900698.4 ist ein Holzbalken beschrieben, der eine Mittellage aus einer Reihe mit ihren Schmalseiten verleimten Bretter besteht, deren Fasern sich quer zur Längsrichtung des Balkens erstecken. Dieses Gebrauchsmuster beschreibt im Wesentlichen die gleiche Herstellmethode wie die bereits erwähnten Schriften DE3908851A1 und CH664185A5.

In der Offenlegungsschrift DE102012110568A1 sind Türen Fenster und Fassadenelemente beschrieben die Decklagen aus keilgezinkten Lamellen aufweisen. Die Auftrennung der Decklagen aus Blöcken von keilgezinkten Brettlagen ist bereits seit langen bekannt und nicht neu. Diese Decklagen als Schicht mit einem weiteren verleimten Block aus Vollholz zu verbinden wird als Sichtfläche im fertigen Produkt verwendet und besteht nicht aus stumpfgestoßenen Brett- oder Stäbchenlagen.

In der Patentschrift AT401747B ist ein Verfahren beschrieben, um Blöcke aus keilgezinkten Schnitthölzer zu erzeugen.

Die Offenlegungsschrift DE102015000495A1 beschreibt ein Verfahren für die maschinell kontrollierte Kappung von Lamellen, um eine vorgegebene Gesamtlänge von Lamellen zu erzeugen. Die daraus hergestellten Stränge werden zu Blöcken verleimt.

Die Patentschrift EP 2 251 168 B1 beschreibt ein Verfahren, Mittellagen aus Blöcken herzustellen. Die Blöcke werden dabei aus Lamellensträngen zusammengefügt und zu einem Paket miteinander verleimt, woraus mittels Auftrennsägen Mittellagenabschnitte herausgetrennt werden.

Weitere Beispiele aus dem Stand der Technik sind z.B. aus der DE 20 2016 007023 U1 und der EP 3 127 669 A1 bekannt, wobei die DE 20 2016 007023 U1 eine Brettsperrholzplatte offenbart mit einer ersten Decklage, einer zweiten Decklage und mindestens einer dazwischen angeordneten Mittellage, wobei die Decklagen jeweils aus Brettlagen mit einer Mehrzahl von in einer Querrichtung nebeneinander angeordneten und in einer Längsrichtung verlaufenden Längsbrettern und mindestens eine Mittellage durch quer oder schräg zur Längsrichtung verlaufende Querbretter gebildet sind, dadurch gekennzeichnet, dass sich die Längsbretter der ersten Decklage und der zweiten Decklage jeweils aus mehreren, in Längsrichtung verlaufenden Brettabschnitten zusammen setzen, wobei benachbarte Brettabschnitte an ihren Stirnkanten im Stumpfstoß aneinander liegen und die Stumpfstöße von in Querrichtung nebeneinander angeordneten Längsbrettern in Längsrichtung versetzt zueinander angeordnet sind, und wobei die EP 3 127 669 A1 ein Verfahren zur Herstellung von Holzbauteilen offenbart, wobei in dem Verfahren: eine erste Holzlamelle an wenigstens einer ihrer flächigen Breitseiten und/oder an wenigstens einer ihrer Schmalseiten mit einem Adhäsiv versehen wird, und die erste Holzlamelle an eine zweite Holzlamelle verklebt wird, um einen Block aus mehreren Holzlamellen zu bilden, wobei sich zumindest die erste Holzlamelle beim Verkleben in einem nassen Zustand befindet.

Im Übrigen zeigt die DE 10 2016 113 132 B3 eine verbesserte Brettsperrholz-Platte, die sich durch folgende Merkmale auszeichnet: - zumindest drei Holzlagen, - zwei parallel mit Seitenversatz zueinander liegende Holzlagen bestehen zu zumindest 80 Gewichtsprozent und/oder zumindest 80 Volumenprozent aus Nadelhölzern, - zwischen den beiden parallel und mit Seitenversatz zueinander angeordneten Holzlagen ist zumindest eine Zwischenlage angeordnet, - die zumindest eine Zwischenlage besteht zu zumindest 80 Gewichtsprozent und/oder zu zumindest 80 Volumenprozent aus Laubhölzern, - die Laubhölzer umfassende Zwischenlage umfasst eine Vielzahl von Laubholzstücken, und - die Vielzahl von Laubholzstücken sind zur Erzeugung zumindest eines durchgängigen Brettes in Längsrichtung miteinander verfügt.

Durch die in Zukunft zunehmende Forstkalamitäten (insbesondere Windwurf, Parasitenbefall und Massenerkrankungen von Waldbeständen) werden vermehrt Rundhölzer aus der (z.B. Europäischen) Forstwirtschaft anfallen. Diese Rundhölzer bzw. Partien führen dann durch Windwürfe, Borkenkäfer und/oder Kernfäule in Starkhölzer zu verminderten Qualitäten. Bereits heute sind solche Partien ein Problem für die Forst- und Holzwirtschaft und stellen die Sägewerke vor große Herausforderungen. Industrieholzpartien, die bei der Durchforstung junger Bestände anfallen und auf Grund sehr geringer Zopfmaße (vgl. zum Begriff Zopfmaß auch die DIN 48350; der Zopfdurchmesser (auch Zopfstärke genannt), bezeichnet den Durchmesser am dünnen Ende des Zopfstücks, des zum Rundholz aufgearbeiteten Stammes) nicht wirtschaftlich für die Schnittholzerzeugung verwendet werden können, bilden in Zukunft wachsende Probleme zur Vermarktung obwohl der Preis dieser Partien weit unter den gefragten Rundholz-Stärkeklassen liegen. In den Forsten sind bereits heute schon Rückstände in der Durchforstung im Bereich der Industrieholzsortimente zu beobachten. Es gilt innovative Technologien für die Verarbeitung dieser Partien anzuwenden.

Anfallende Industriehölzer ab einem Durchmesser von ca. 60 mm können derzeit nicht zu gängigen Schnitthölzern beispielsweise im Verpackungsbereich gesägt werden (kleinste Schnittholzdimension für Paletten 12x78 mm). Ein Auftrennen und Einschneiden solcher Rundholzpartien ist nur dann sinnvoll, wenn die Ausbeute sehr hoch ist und eine Weiterverarbeitung der anfallenden Schnittholzware möglich ist.

Bisher werden Schnitthölzer aus minderen Qualitäten von Rundhölzern hauptsächlich im Bereich von Verpackungen vermarket. Da dieser Markt begrenzt aufnahmefähig ist, sind Überkapazitäten am Markt mit entsprechend negativem Einfluss auf Preis und Aufnahmefähigkeit dieses Segmentes in der Verarbeitung die Folge. Auch der Einsatz im Bereich von Brettsperrholz und Mittellagen erfordern durch die aktuellen Fertigungsmethoden höherwertige Schnittholzdimensionen und können in Bezug auf Ausbeute und wirtschaftlichem Einschnitt nur begrenzt aufgenommen werden. In Mitteleuropa sind die herkömmlichen Methoden, um solche Partien zu verwerten, häufig durch Keilzinkung und beispielsweise Aufarbeitung in Mittellagen für Mehrschichtplatten oder Mittellagen für Parkett bekannt.

Die Herstellung von Platten mit Mittellagen aus stumpfgestoßenen Brett- oder Stäbchenlagen sind seit langem bekannt. Ein Herstellen von Platten mit sehr dünner Deckschicht und dem ebenfalls gewünschten dünnen Gegenzug ist mit der herkömmlichen Methode Platten zu produzieren kaum möglich. Dünne Lagen sind aufgrund der Instabilität dünner Plattenschichten aus stumpfgestoßenen Brett- oder Stäbchenlagen für das Verbinden in der Praxis nicht geeignet. Diese Stäbchenlagen weisen auf Grund der Einzel- Stäbchen- Verleimung Toleranzen auf, die eine schlechte Verbindungen in dünnen Lagen ergeben, wobei sie sogar einzelne Stäbchen, durch die Deckschichten hindurch, in der Plattenfläche abzeichnen könnten. Die Verbindung zu einem mehrschichtigen Aufbau führt sehr häufig zu Störungen durch Brechen der Platten oder zu Fehlverleimungen.

Solche einzelnen geschnittene Stäbchen sind durch die herkömmlichen Methoden teilweise sehr ungenau, nicht rechtwinkelig oder weisen Risse auf und können die Qualität der daraus hergestellten Mittellagenplatten mindern.

Es ist die Aufgabe der vorliegenden Erfindung, ein Verfahren zur Herstellung eines Holzbauelementes sowie ein Holzbauelement in vorteilhafter Weise weiterzubilden, insbesondere dahingehend, dass aus minderen Qualitäten von Rundhölzern hochwertige und stabile Holzbauelemente hergestellt werden können, um eine nachhaltigere Nutzung dieser Hölzer zu ermöglichen.

Diese Aufgabe wird erfindungsgemäß gelöst durch ein Verfahren zur Herstellung eines Holzbauelementes mit den Merkmalen des Anspruchs 1. Das erfindungsgemäße Verfahren zur Herstellung eines Holzbauelementes, umfasst die folgenden Schritte:
- Es wird eine Mehrschichtplatte ausgebildet, wobei eine erste Schicht der Platte aus zumindest teilweise miteinander mit einem Bindemittel fest miteinander verbundenen Brettern oder Stäbchen gebildet wird, wobei in der ersten Schicht die Bretter oder Stäbchen in Längsrichtung versetzt zueinander angeordnet und stumpf gestoßen zum in Längsrichtung angrenzenden Brett oder Stäbchen angeordnet werden,
- wobei wenigstens eine zweite Schicht auf der ersten Schicht aufgesetzt und mit dieser mit einem Bindemittel miteinander verbundenwird, die ebenfalls aus zumindest teilweise miteinander mit einem Bindemittel fest miteinander verbundenen Brettern gebildet wird, wobei in der zweiten Schicht die Bretter in Längsrichtung versetzt zueinander angeordnet und stumpf gestoßen zum in Längsrichtung angrenzenden Brett oder Stäbchen angeordnet werden und wobei die zweite Schicht in Faserrichtung versetzt zur ersten Schicht angeordnet ist, wobei
- weiter wenigstens eine dritte Schicht auf der zweiten Schicht aufgesetzt wird, so dass die zweite Schicht zwischen der ersten Schicht und der dritten Schicht angeordnet ist, und mit dieser mit einem Bindemittel fest miteinander verbunden wird, die ebenfalls aus zumindest teilweise miteinander mit einem Bindemittel fest miteinander verbundenen Brettern gebildet wird, wobei in der dritten Schicht die Bretter in Längsrichtung versetzt zueinander angeordnet und stumpf gestoßen zum in Längsrichtung angrenzenden Brett angeordnet werden und wobei die zweite Schicht in Faserrichtung einem Winkel von 0°-90° zur ersten Schicht und der dritten Schicht angeordnet ist, und wobei
- jede dieser Schichten aus stumpfgestoßenen Brettlagen besteht, dadurch gekennzeichnet, dass
- die Platte aus einem Block derart erzeugt wird, dass der Block in Faserrichtunq anhand von Schnittlinien zu Abschnitten aufqetrennt wird, wobei die Abschnitte die stumpfqestoßene Brettlaqe der zweiten Schicht in Form einer Mittellage oder die stumpfqestoßene Brettlaqe der ersten und dritten Schicht in Form von Decklagen bilden und je nach Schnittführunq eine Dicke d aufweisen, wobei
- der Block aus einem gepressten Block ausgebildet wird, bei dem eine Anzahl von Lamellensträngen eine Blockbreite ergibt, wobei bei den Lamellensträngen, die in Faserrichtung hintereinandergelegt werden, Holzfehler weitestgehend in den einzelnen Lamellensträngen verbleiben, wobei einzelne Lamellenstränge mit einer Bindemittelschicht verbunden werden, so dass die Holzfehler fixiert werden und sich keine Störungen beim Auftrennen oder Weiterverarbeiten ergeben können

Der Begriff verleimt ist so zu verstehen, dass jegliche Verbindung, bei der Elemente wie Bretter oder Stäbchen mit einem Bindemittel fest miteinander verbunden werden, damit umfasst ist, auch wenn kein Leim im klassischen Sinne verwendet wird. Ein Stumpfstoß ist so zu verstehen, dass Bretter oder Stäbchen einer Schicht ohne Verzahnung oder dergleichen zueinander angeordnet und miteinander z.B. durch Verleimen in Längsrichtung miteinander verbunden werden.

Die Erfindung basiert auf dem Grundgedanken, dass die neuen Platten mit allen Schichten aus stumpfgestoßenen Brett- oder Stäbchenlagen bestehen. Diese neuen Platten können kostengünstig hergestellt werden und weisen eine wesentlich höhere Holzausbeute bei geringeren Herstellkosten auf. Die aufwendige und teure Keilzinkenverbindung der Lamellen in den einzelnen Plattenschichten wird vermieden, Leim und Material eingespart und es ergibt sich ein wirtschaftliches Rohprodukt für die Weiterverwendung, beispielsweise zur Parkettherstellung. Weitere Anwendungen und neue Einsatzmöglichkeiten bietet die Kombination der stumpfgestoßenen Brett- oder Stäbchenlagen, in der Herstellung mit der Kombination von durchgehenden festigkeitssortierten oder keilgezinkten Lamellen für Fertighausstile, statisch belastete Bauteile, Stegträger oder Regalbretter etc. Die Anwendung kann des Weiteren für die Produktion aller Decklagen für CLT (cross laminated timber) beispielsweise im Fertighausbau verwendet werden, wenn nur ein Teil der Lamellen keilgezinkt wird und die benötigten Festigkeitseigenschaften aufweist. Bei der Verwendung als reine Mittellage in diesem Bereich könnte sogar auf die Keilzinkung verzichtet werden, da die Statik durch die Deckschichten ausreichend erfüllt wird.

Insbesondere kann vorgesehen sein, dass die Lagen des mehrschichtigen Holzbauelementes aus Nadelhölzer, Laubhölzer und Exotenhölzer gebildet werden, wobei auch Kombinationen der Holzarten Verwendung finden können, insbesondere wenn Lamellenlagen aus statischen Gründen mit durchgehenden Lamellen versehen werden. Diese durchgehenden Lamellen können vorteilhaft aus Holzarten bestehen mit höheren Festigkeitswerten, gegenüber den Holzarten, der Lamellensträngen mit Stumpfstoß.

In der Parkettindustrie werden Mittellagen benötigt, die derzeit aus stumpfgestoßenen Brett- oder Stäbchenlagen bestehen. In der Produktion müssen Decklage und Gegenzug aufwendig auf die Mittellagen aufgeleimt werden.

Von Vorteil ist es beispielsweise, Platten aus wenigsten 2 Schichten herzustellen, die beispielsweise in der Parkettindustrie 2 Schichten aufweist, wobei eine Schicht als Gegenzug mit sehr dünnen Schichtdicken hergestellt wird, um das aufwendige Aufbringen eines dünnen Gegenzuges zu vermeiden. Ebenfalls können statisch belastete Bauteile hergestellt werden, die aus einer Kombination von statisch festen durchgehenden Lamellen und aus stumpfgestoßenen Brett- oder Stäbchenlagen bestehen, die in allen Schichtebenen stumpfgestoßenen Brett- oder Stäbchenlagen aufweisen.

Die neuen Platten vereinfachen den bisherigen Aufwand, Mehrschichtplatten herzustellen erheblich, weil die Lagen mit stumpfgestoßenen Brett- oder Stäbchenlagen so vorbereitet werden können, dass aus Schnitthölzern von minderen Qualitäten, nur die groben Fehler herausgekappt werden und die Abschnitte in einer intelligenten Weise hintereinander liegend, die gewünschte Länge der Platte ergeben. Diese gewünschten Längen von hintereinander liegenden Stumpfgestoßenen Schnitthölzer werden zu Blöcken verleimt. Mit "intelligenter Weise" ist insbesondere gemeint, dass die Längen der einzelnen Abschnitte so überwacht und eingestellt werden, dass sich keine Stumpfstöße der Schnitthölzer unmittelbar nebeneinanderliegend ergeben. Diese Anordnung oder nur um 1-5mm versetzten Brettstöße nennt der Fachmann Auftreppungen. Dies bedeutet, dass die stumpfgestoßenen Brettlagen an dieser Stelle, keine oder geringe Festigkeiten in Biegung und Zugfestigkeit aufweisen. Es ist also von einer versetzten Stumpfstoßlage auszugehen, um diese Nachteile zu vermeiden. Diese Versätze von Stößen in Brettlagen werden beim Herstellen von Brettschichtholz (Leimbinder) üblicherweise durch eine Überwachung der Abschnitte realisiert. Ebenfalls werden die Längen der hintereinanderliegenden Brettlagen exakt auf die gewünschte Längen abgetrennt, wobei beachtet wird, dass das Anfangs- und Endbrett eine vorgegebene Mindestlänge nicht unterschreitet. Diese Überwachung erfolgt in der Praxis beispielsweise durch die Messung der Mindestbrettlänge mittels kostengünstiger Lichttaster, der die Freigabe für die nächsten Bretter gibt, wenn der auf die Mindestlänge eingestellte Lichtaster für das erste Brett belegt ist. Falls nicht wird der zu kurze Brettabschnitt ausgeworfen. Dabei wird dieser Brettabschnitt für die nächste Lamellenstrang verwendet. Bei der Gesamtlänge wird ebenfalls über die Position von Lichttastern die Restlänge überwacht und somit ein Lamellenstrang erzeugt, der exakt der gewünschten Blockund späteren Plattenlänge entspricht. Die Kappanlage und Methode der hintereinanderliegenden Brettabschnitte ist nicht erläutert und entspricht dem Stand der Technik bei der Herstellung von Brettschichtholz oder herkömmlichen Mittellagen.

Die Herstellung von Platten mit mehreren Schichten, die aus stumpfgestoßenen Brett oder Stäbchenlagen bestehen, wird somit mit einem neuen wirtschaftlichen Verfahren umgesetzt. Die vorbereiteten Brettabschnitte, die hintereinanderliegend der Länge der späteren Platten entspricht, werden nach der Hobel- und Kappanlage zu Paketen gestapelt die zwischengelagert werden können. Die Zwischenlagerung dieser vorbereiteten Pakete bietet den Vorteil, dass die Kappanlage jederzeit mit voller Leistung produzieren kann, ungeachtet von sehr unterschiedlichen Holzqualitäten, die mehr oder weniger Kappschnitte benötigen und die Produktionsgeschwindigkeit beeinflussen. In der Praxis hat sich auch gezeigt, dass stark verkrümmte, oder großen Längsrissen in der Eingangsware häufig zu Störungen und Stopps der Hobel- und Kapplinie führt. Deshalb wird dieser Arbeitsschritt unabhängig von den folgenden Arbeitsschritten ausgeführt und es wird die Möglichkeit geschaffen, beispielsweise die Hobel- Kappanlage für weitere Produktionen zu verwenden.

Die mit den stumpfgestoßenen Brett- oder Stäbchenlagen gebildeten Stapel werden dann der Verleimlinie zugeführt. Die Brettlagen werden dabei vom Stapel, mittels eines Greifsystems in einer oder mehreren nebeneinanderliegenden und hintereinanderliegenden stumpfgestoßenen Brett- oder Stäbchenlängen aufgenommen und in nachfolgende Querfächer abgelegt. Dabei wird das Greifersystem die nebeneinanderliegenden und hintereinanderliegenden stumpfgestoßenen Brett- oder Stäbchenlängen seitlich verfahren, dass die hintereinanderliegenden stumpfgestoßenen Brett- oder Stäbchenlängen auf dem Abstand liegen, dass sie in die Fächer abgelegt werden können.

Der Fächertransport fördert die in den Fächern liegenden hintereinanderliegenden stumpfgestoßenen Brett- oder Stäbchenstränge zur Beleimstation. Die Beleimstation ist beispielsweise eine Roboterbeleimung, die auf 3 Linearachsen die Schnitthölzer beleimt. Die Beleimung bewegt sich in Längsachse der in den Fächern hintereinanderliegenden Stäbchenenlagen und ein Bindemittel wird aufgebrachte wobei die Bindemitteldosiereinrichtung für ein oder mehrere Fächer ausgelegt wird, um die Geschwindigkeit der Beleimung zu erhöhen. Die Roboterbeleimung wird auf den optimalen Abstand der Dosierung in der Höhe, je nach Dicke der Stäbchen eingestellt. Ebenfalls wird die Dosiereinrichtung auf die Brettbreite eingestellt.

Nach der Beleimung werden die hintereinanderliegenden Schnitthölzer in die Presse eingeschoben und mittels einer Aufstellvorrichtung auf die Seitenfläche der Schnitthölzer aufgestellt. Die auf der Seite stehenden Bretter werden dann in der Presse quergetaktet wobei die Oberdrücke der Presse einen Druck ausüben, der die Schnitthölzer bei Krümmungen oder Versätzen ausrichtet. Mit einer festen stirnseitigen Andruckplatte werden die hintereinanderliegenden stumpfgestoßenen Brett- oder Stäbchenlängen hydraulisch oder pneumatisch angepresst, sodass mögliche Abstände die sich durch Transport und Bewegung gebildet haben bündig so zusammengepresst werden, dass sich alle stumpfgestoßenen Enden der Schnitthölzer ohne Lücken berühren. Dies stellt sicher, dass in der später erzeugten Lage von hintereinanderliegenden stumpfgestoßenen Brett- oder Stäbchenlängen keine Lücken zwischen den Brettenden ergeben und somit die Qualität der Lagen beziehungsweise Platten verbessert wird. Wenn eine hintereinanderliegenden stumpfgestoßenen Brett- oder Stäbchenlängen nicht beleimt wird entsteht eine Leerfuge, die die Anzahl der Lagen und somit die Blockbreite bestimmt. Die Zuführung ist so ausgelegt, dass neben der Aufgabe von hintereinanderliegenden stumpfgestoßenen Brett- oder Stäbchenlängen aus einem Paket, auch eine oder mehrere Stapel bereitgestellt werden können und das Greifersystem je nach späterer Kombination in den Blöcken andere Qualitäten von hintereinanderliegenden stumpfgestoßenen Brett- oder Stäbchenlängen oder beispielsweise Keilgezinkte oder durchgehende Fixlängen von Brettwaren aufgeben kann. Diese Kombination ist beispielsweise von Vorteil, wenn höhere Stabilitäten der Platten produziert werden sollen.

Nach dem Aushärten des Bindemittels in der Presse werden die Blöcke aus hintereinanderliegenden stumpfgestoßenen Brett- oder Stäbchenlängen oder Kombinationen mit durchgehenden Brettlängen abtransportiert und mittels geeigneter Stapeleinrichtung, zu großen Stapel paketiert. Eine direkte Weiterverarbeitung der Blöcke ist ebenfalls möglich, wenn diese direkt aufgetrennt werden können. Auf Grund unterschiedlicher Durchlaufzeiten ist ein Stapelvorgang von Vorteil, weil die einzelnen Bearbeitungen mit maximal möglicher Produktionsleistung erfolgen können.

Durch die Erfindung und ihre vorteilhaften Ausführungsformen wird es möglich, auf zukünftigen Anfall minderer Schnittholzqualitäten in einer neuen Art der Weiterverarbeitung zu reagieren und hochwertige Produkte bereit zu stellen. Die aktuelle Nutzung für die Papier- und Plattenindustrie sowie die energetische Nutzung dieser Sortimente bzw. Partien kann nun durch eine weit höherwertige und sinnvollere Verwendung in Massivholzplatten ergänzt werden. Aus dieser Aufwertung lassen sich erfindungsgemäße Halb- und Fertigprodukte in mehreren Stufen kostengünstig herstellen und vermarkten.

Weiter wird durch die Erfindung und ihre vorteilhaften Ausführungsformen eine Automatisierung und höhe Produktionsleistung von Platten mit dünnem Gegenzug bzw. dünnen Schichtdicken an den Oberflächen ermöglicht. Durch die hohe automatisierte intelligente Technik können alle Bearbeitungsschritte, im Bereich der Stäbchenzuschnitts und Verbindung der Platten, mit geringsten Maßtoleranzen produziert und gegenüber den im Markt üblichen Zuschnitt von Einzelstäbchen deutlich verbessert werden.

Im oben genannten, erfindungsgemäßen Verfahren, kann vor dem Verpressen der Lamellen, an den Stirnseiten ebenfalls eine Bindemittelschicht aufgebracht werden, um die Festigkeit der Lamellenstränge zu erhöhen. Diese Verbindung wird vorteilhaft durch Bindemittel, die für die stirnseitige feste Verbindung von Hölzern geeignet ist, bewerkstelligt. In der Blockpresse werden die Lamellenlagen, vor dem Verpressen der Seitenflächen zueinander, mittels Presstempel in Längsrichtung der Lamellen verpresst, sodass eine feste Verbindung der Lamellen an ihren Stirnseiten erzielt wird. Dies erhöht die Festigkeit der Platten und erhöht auch beispielsweise die Luftundurchlässigkeit, bei Produkten für den Hausbau wie beispielsweise CLT Elemente.

Die wenigstens eine dritte Schicht wird auf der zweiten Schicht aufgesetzt, so dass die zweite Schicht zwischen der ersten Schicht und der dritten Schicht angeordnet ist, und mit dieser mit einem Bindemittel fest miteinander verbunden wird, die ebenfalls aus zumindest teilweise miteinander mit einem Bindemittel fest miteinander verbundenen Brettern gebildet wird, wobei in der dritten Schicht die Bretter in Längsrichtung versetzt zueinander angeordnet und stumpf gestoßen zum in Längsrichtung angrenzenden Brett angeordnet werden und wobei die dritte Schicht in Faserrichtung versetzt zur zweiten Schicht angeordnet ist. Dadurch wird erreicht, dass die Mittellage, also die zweite Schicht auf beiden Seiten einen Gegenzug aufweist. Dadurch wird es auch überhaupt erst möglich, die Mittellage aufzutrennen und vergleichsweise dünne Schichten zu erzeugen. Die Mittellage kann aus stabilitätsgründen in einem Winkel von 90° bis 0° oder gegenseitig liegend von 0-90° zur Deckschicht eingelegt werden, je nach Anforderung im Bereich der Festigkeit oder des Stehvermögens der späteren Produkte. Mit Stehvermögen ist die Widerstandsfähigkeit der Platten gegen Verformungen in der Plattenebene gemeint.

Außerdem kann vorgesehen sein, dass wenigstens bei einem benachbarten Schichtenpaar die jeweiligen Faserrichtungen senkrecht zueinander angeordnet sind. Durch die senkrechte Ausrichtung wird aus Sicht des Erfinders die größtmögliche Stabilität erreicht.

Darüber hinaus kann vorgesehen sein, dass das aus drei Lagen oder mehrschichtigen bestehende Holzbauelement (z.B. in Form einer Platte) in der Mittelschicht aufgetrennt wird. Durch die Auftrennung lassen sich sehr dünne Plattenelemente erzeugen. Es ist nicht erforderlich, zur Erreichung dünner Plattenstärken mit dünnen bzw. flachen Grundelementen wie Bretter oder Stäbchen mit geringer Dicke, die stark zum Brechen oder sonstigen mechanischen Versagen neigen, zu arbeiten. Außerdem wird es durch das Auftrennen möglich, die so entstandenen Platten noch einmal mit anderer Orientierung zueinander, miteinander zu verbinden und dadurch die Festigkeit zu steigern.

Insbesondere kann vorgesehen sein, dass die Auftrennung der Mittelschicht in Richtung der Faserrichtung erfolgt. Dadurch kann die Festigkeit der entstehenden Platten verbessert werden. Auch die Verschnittgefahr wird hierdurch minimiert, weil die Auftrennung in dieser Richtung saubere und schnellere Schnitte ermöglich. Ein Herausbrechen von Brettern oder Stäbchen wird sicher vermieden.

Des Weiteren ist denkbar, dass die Bretter oder Stäbchen in der zweiten Schicht bzw. in der Mittelschicht andere Abmessungen haben als die Bretter oder Stäbchen in den benachbarten Schichten. Dadurch wird erreicht, dass deutlich mehr Grundelemente (d.h. Bretter und/oder Stäbchen) übereinander zu liegen kommen, bzw. miteinander verbunden werden. Ein signifikanter Stabilitätsgewinn wird hierdurch erzielt.

Außerdem ist möglich, eine der aufgetrennten Plattenhälften mit anderer Orientierung an der zweiten Plattenhälfte angeordnet und mittels einer Bindemittelschicht fest miteinander verbunden wird. Man spricht in diesem Zusammenhang auch davon, dass eine Plattenhälfte in der Achse der Faserrichtung gedreht wird. Dadurch entsteht ein neuer Plattenaufbau der in allen Beanspruchungsebenen höhere Festigkeiten aufweist. Solche Platten eignen sich ideal als Mittellagen für einen mehrschichtigen Plattenaufbau. Beispielsweise Dreischichtplatten werden dadurch zu einer Vierschichtplatte die in der Mittellage erhöhte Festigkeiten aufweist.

Die Bretter können eine minimale Länge von ca. 100 mm aufweisen. Hierdurch wird eine besonders gute Verwertung des Ausgangsmatenals (siehe vorstehende Ausführungen) ermöglicht. Die Bretterlänge bezieht sich dabei auf die Länge vor der Stumpfstoßverleimung, insbesondere die Länge vor der stumpfgestoßenen Blockverleimung.

Insbesondere ist denkbar, dass jede Schicht aus stumpfgestoßenen Brett- oder Stäbchenlagen besteht.

Nach dem Auftrennen der Blöcke in die gewünschte Dicke der späteren Platten werden die Abschnitte seitlich nebeneinanderliegend mit Ihren Schmalseiten verleimt und bilden nach dem Verpressen großformatige Platten.

Diese erfindungsgemäßen verbundenen Mehrschichtplatten weisen in allen Längs¬ und Querlagen hintereinanderliegenden stumpfgestoßenen Brett- oder Stäbchenlängen auf. Durch Auftrennen in Längsrichtung des Faserverlaufs der Decklage oder quer zur Decklage werden Plattenstreifen geschnitten.

Eine besonders vorteilhafte Ausführung ist die Kombination von Mehrschichtplatten deren Deckschichten aus Streifen von Brettlagen aus Blöcken mit durchgehenden Brettlagen, die auf Zug belastete werden können und stumpfgestoßenen Brett- oder Stäbchenlängen bestehen. Wenn diese Platten beispielsweise 3 Schichtplatten aus Deckschichten mit statisch belastbaren durchgehenden Lamelle, in Streifen, in Längsrichtung der Fasern der Deckschichten aufgetrennt werden, können Stiele für Fertighäuser hergestellt werden. Diese Fertighausstiele haben hohe Festigkeiten und sind in der Feuchtigkeit komplett homogen, bei niedrigeren Feuchtewerten als bei den Massivholzstielen, die derzeit eingesetzt werden. Massivholz ist geringer belastbar als verleimte Lamellen und ist bei größeren Dimensionen weniger gut zu trocken. Für diese Stiele sind gute Holzqualitäten und Mindest-Zopfdurchmesser von Rundhölzern erforderlich, um die gewünschten Querschnitte der Stiele aus Massivholz zu erhalten. Mit der aufgezeigten neuen Methode sind aus geringeren Zopfdurchmesser aufweisenden Rundholzpartien, solche hochwertigen Fertighausstiele produzierbar. Die Dimensionen der verwendeten Schnitthölzer lässt sich gut auf die benötigten Feuchten trocknen und es sind mit viel weniger Probleme durch Verdrehen oder Rissbildung zu rechen. Die Weiterverarbeitung in der Fertighausproduktion ist dadurch leicht möglich und verbessert die Qualität der Wandaufbauten.

Eine vorteilhafte Weiterbearbeitung ist das Auftrennen dieser Plattenstreifen durch einen Trennschnitt in der Mittellage mit Stumpfstoß. Dabei entstehen je zwei Hälften von zweischichtigen Plattenstreifen, wobei diese Plattenstreifen aus einer Querlage und einer Längslage bestehen und die Längslage als dünnen Gegenzug verwendet werden kann. Wenn diese zweischichtigen Platten mit einer Deckschicht mit gleichem Faserverlauf wie der Gegenzug verbunden werden, ergeben sich Fertigprodukte wie beispielsweise Parkett oder Fassadenplatten und dergleichen.

Mehrschichtplatten mit kreuzverleimten Lagen, sind im aktuellen Stand der Technik immer mit durchgehenden Lagen im Bereich der Deckschichten ausgeführt. Diese Ausführungen sind den ästhetischen und statischen Gründen geschuldet.

Ein Ausführungsbeispiel ist die Kombination der erfindungsgemäßen Platten mit Wandplatten. Der Einsatz von Brettsperrholz oder CLT (Cross Laminated Timber) wird als statisches Bauteil für Wände, Decken, Dachelemente etc. eingesetzt. Diese Platten sind aus statischen Gründen aus Lamellen die fehlergekappt und in der Längsrichtung nach Vorschrift keilgezinkt werden müssen. Alle für statische Zwecke einzusetzenden Hölzer unterliegen Sortierungsvorschriften nach DIN 4047 - (Sortierung von Holz nach der Tragfähigkeit). Die einzelnen Lamellen müssen beispielsweise It. Bauvorschrift DIN EN 16351 2011-12 ein Verhältnis von Lamellenbreite zu Lamellendicke in einer Lage, ohne Schmalseitenverleimung kleiner als 4 aufweisen. Da CLT bei den meisten Herstellern in Europa ohne diese Schmalseitenverleimung gefertigt werden, können Schnittholzdimensionen, die über diesem Verhältnis liegen nicht verwendet werden. Beispielsweise können Lamellen mit 40 mm Lamellendicke und einer Lamellenbreite von über 160 mm nicht eingesetzt werden, wenn die Schmalseitenverleimung fehlt. Gerade diese Selektion ergibt teilweise erhebliche Preisnachteile für die Schnittware für den CLT Einsatz.

Eine Kombination der erfindungsgemäßen Platte als Aufdopplung von CLT erzielt höhere Dichtheit durch die Schmalseitenverleimung, die auf Grund des Produktionsverfahrens der erfindungsgemäßen Platte gegeben ist. Dünne CLT Wände, die aus wirtschaftlichen Gesichtspunkten hergestellt werden, weisen zudem geringere Wärmekapazität auf und geringere Schalldämmwerte. Oft ist die für das Raumklima und den Schallschutz erforderliche Dicke der Wände dadurch zu teuer und muss durch zusätzliche Einbauten ausgeglichen werden. Ein Herstellen von sehr dicken CLT Wänden ist durch die Keilzinkenverbindungen sehr aufwändig und teuer. Mit den erfindungsgemäßen Platte als Aufdoppelung können diese Nachteile vermieden werden und die gewünschten Wandstärken erzielt werden ohne, dass statischen Erfordernisse berücksichtigt werden müssen, da diese von den normgerechten CLT Platten erfüllt werden. Der kostengünstige Einsatz von geringeren Schnittholzquerschnitten als nach Norm gefordert, gepaart mit den Stumpfstoßverbindungen die Holz einsparen und kostengünstiger sind ermöglicht die wirtschaftliche Produktion von neuen CLT Dicken im Hausbau mit den genannten Vorteilen. Da die erfindungsgemäßen Platten durch die hohen Genauigkeiten und den entsprechenden Holzqualitäten bzw. der geringeren Klebefugendicken als sie bei der CLT Produktion vorkommen können, sehr wohl Festigkeiten auf Zug und Druck aufweisen, können diese statisch belastet werden unter der Berücksichtigung eines Minderungsfaktors von beispielsweise Faktor 0,75 bezogen auf die Festigkeiten von normgerecht hergestellten CLT Elemente.

Außerdem betrifft die vorliegende Erfindung ein Holzbauelement. Ein erfingungsgemäßes Holzbauelement ist als Mehrschichtplatte ausgebildet,
- wobei eine erste Schicht der Platte aus zumindest teilweise miteinander mit einem Bindemittel fest miteinander verbundenen Brettern gebildet ist, wobei in der ersten Schicht die Bretter in Längsrichtung versetzt zueinander angeordnet und stumpf gestoßen zum in Längsrichtung angrenzenden Brett angeordnet sind,
- wobei wenigstens eine zweite Schicht auf der ersten Schicht aufgesetzt und mit dieser mit einem Bindemittel fest miteinander verbunden ist, die ebenfalls aus zumindest teilweise miteinander mit einem Bindemittel fest miteinander verbundenen Brettern gebildet ist, wobei in der zweiten Schicht die Bretter in Längsrichtung versetzt zueinander angeordnet und stumpf gestoßen zum in Längsrichtung angrenzenden Brett angeordnet sind und wobei die zweite Schicht in Faserrichtung versetzt zur ersten Schicht angeordnet ist, wobei
- weiter wenigstens eine dritte Schicht auf der zweiten Schicht aufgesetzt ist, so dass die zweite Schicht zwischen der ersten Schicht und der dritten Schicht angeordnet ist, und mit dieser mit einem Bindemittel fest miteinander verbunden ist, die ebenfalls aus zumindest teilweise miteinander mit einem Bindemittel fest miteinander verbundenen Brettern gebildet ist, wobei in der dritten Schicht die Bretter in Längsrichtung versetzt zueinander angeordnet und stumpf gestoßen zum in Längsrichtung angrenzenden Brett angeordnet sind und wobei die zweite Schicht in Faserrichtung einem Winkel von 0°-90° zur zweiten und dritten Schicht angeordnet ist, und wobei
- jede Schicht aus stumpfgestoßenen Brettlagen besteht, dadurch gekennzeichnet, dass
- die aus einem Block in Faserrichtung anhand von Schnittlinien zu Abschnitten aufgetrennte und daraus erzeugte Platte derart bereitgestellt ist, dass die stumpfgestoßene Brettlage der zweiten Schicht in Form einer Mittellage oder die stumpfgestoßene Brettlage der ersten und dritten Schicht in Form von Decklagen durch die Abschnitte gebildet ist und wobei die Abschnitte je nach Schnittführung eine Dicke d aufweisen, wobei
- der Block aus einem gepressten Block ausgebildet ist, bei dem eine Anzahl von Lamellensträngen eine Blockbreite ergibt, wobei bei den Lamellensträngen, die in Faserrichtung hintereinandergelegt sind, Holzfehler weitestgehend in den einzelnen Lamellensträngen verbleiben, wobei einzelne Lamellenstränge mit einer Bindemittelschicht verbunden sind, so dass die Holzfehler fixiert sind und sich keine Störungen beim Auftrennen oder Weiterverarbeiten ergeben können.

Das Holzbauelement kann insbesondere mit dem vorstehend beschriebenen Verfahren hergestellt werden.

Die wenigstens eine dritte Schicht ist auf der zweiten Schicht aufgesetzt, so dass die zweite Schicht zwischen der ersten Schicht und der dritten Schicht angeordnet ist, und mit dieser mit einem Bindemittel fest miteinander verbunden ist, die ebenfalls aus zumindest teilweise miteinander mit einem Bindemittel fest miteinander verbundenen Brettern gebildet ist, wobei in der dritten Schicht die Bretter in Längsrichtung versetzt zueinander angeordnet und stumpf gestoßen zum in Längsrichtung angrenzenden Brett angeordnet sind und wobei die dritte Schicht in Faserrichtung versetzt zur zweiten Schicht angeordnet ist.

Außerdem kann vorgesehen sein, dass wenigstens bei einem benachbarten Schichtenpaar die jeweiligen Faserrichtungen senkrecht zueinander angeordnet sind. Die Bretter oder Stäbchen in der zweiten Schicht bzw. in der Mittelschicht können andere Abmessungen haben als die Bretter oder Stäbchen in den benachbarten Schichten.

Des Weiteren kann vorgesehen sein, dass die ehemalige Mittelschicht aufgetrennt, insbesondere in Faserrichtung aufgetrennt ist, und eine der Plattenhälften mit anderer Orientierung an der zweiten Plattenhälfte angeordnet und mittels einer Bindemittelschicht fest miteinander verbunden ist.

Die Bretter können vor der Stumpfstoßverleimung beispielsweise eine minimale Länge von 100 mm aufweisen können. Mit Stumpfstoßverleimung ist insbesondere die stumpfgestoßene Blockverleimung gemeint (siehe auch vorstehend).

Jede Schicht kann aus stumpfgestoßenen Brett- oder Stäbchenlagen bestehen. Außerdem betrifft die vorliegende Erfindung die Verwendung eines Holzbaulement zur Herstellung von Parkett, einer Holzwand, eines tragenden Holzträgers und/oder Holzständers für ein Gebäude und/oder einer Holzplatte. Die Platten können einen zweischichtigen oder mehrschichtigen Aufbau aufweisen. Die Schichten können mit gleich- oder unterschiedlichen dicken Lagen ausgebildet sein und mit wenigstens einer Deckschicht verbunden werden, die gleichbreit oder schmaler als die z.B. zweischichtige Platte besteht, so dass als Endprodukt die Platte einen dreischichtigen oder mehrschichtigen Aufbau aufweist.

Die Platte kann so ausgebildet sein, dass in einer Schicht einzelne Lamellen durchgehend ausgeführt sind, um die statische Festigkeit der zweischichtigen oder mehrschichtigen Platten zu erhöhen.

Weiter können die Platten so ausgeführt werden, dass die zweischichtigen Platten oder mehrschichtigen mit einer Deckschicht versehen werden, um Bretter wie z.B. Regalbretter zu erhalten, die hohe Biegefestigkeiten aufweisen.

Außerdem ist denkbar, dass die Platten so ausgebildet werden, dass Plattenstreifen mit durchgehenden Lamellen zu Fertighausstilen, Tragbalken oder ähnlichen Produkten aufgetrennt werden, wobei an den Kanten jeweils ein durchlaufendes Stäbchen eingesetzt wird, um hohe Druck- und Zugfestigkeiten zu erhalten.

Weiter ist denkbar, dass statisch zertifizierte Brettsperrholzplatten mit dem erfindungsgemäßen Holzbauelement wie einer Platte als Aufdopplung kombiniert werden, und wobei die Platten mittels Montageverbindung mit Schrauben, Nägeln, Montagbindemittel fest verbunden werden. In diesem Zusammenhang ist dann denkbar, dass die erfindungsgemäße Platte keine statische Funktion übernimmt. Weitere Einzelheiten und Vorteile der Erfindung sollen nun anhand der in den Zeichnungen dargestellten Ausführungsbeispiele näher erläutert werden.

Es zeigen:
- **Fig. 1**: eine Explosionszeichnung eines erfindungsgemäßen Holzbauelements in Form einer Platte in isometrischer Darstellung, gezeigt in Zusammenhang in Anwendung des erfindungsgemäßen Verfahrens;
- **Fig. 2**: eine isometrische Darstellung einer Auftrennung der erfindungsgemäßen Platte gemäß **Fig. 1**;
- **Fig. 3 und 3'**: eine isometrische Darstellung einer nicht erfindungsgemäßen Platte mit zwei Schichten;
- **Fig. 4**: isometrische Darstellung einer nicht erfindungsgemäßen Platte mit Parkettdeckschicht;
- **Fig. 5**: die Art der Aufteilung der verleimten Blöcke des Holzbauelements;
- **Fig. 6**: eine Platte aus den aufgetrennten Streifen der Blöcke in Draufsicht;
- **Fig. 7**: erfindungsgemäße Platte in Draufsicht;
- **Fig. 8**: Anwendung einer erfindungsgemäßen Platte in Schnittansicht;
- **Fig. 9**: Auftrennen einer erfindungsgemäßen Platte in Schnittansicht;
- **Fig. 10**: Explosionszeichnung eines Teils der erfindungsgemäßen Platte zur Verbindung mit einer herkömmlichen Brettsperrholzplatte (CLT);
- **Fig. 11**: Explosionszeichnung einer Kombination von einer herkömmlichen Brettsperrholzplatte (CLT) mit der erfindungsgemäßen Platte;
- **Fig. 12**: eine Platte mit stumpfgestoßenen Lamellen in Draufsicht;
- **Fig. 13**: Teilschnitt einer stumpfgestoßenen Platte;
- **Fig. 14**: Schnitt durch eine Mittellagenplatte mit Auftrennlinie;
- **Fig. 15**: Schnitt durch eine in der Fläche verleimte Mittellagenplatte;
- **Fig. 16**: Schnitt durch eine Mittellagenplatte mit Auftrennlinie;
- **Fig. 17**: Schnitt durch eine in der Fläche, mit seitlich versetzt Lamellen verleimte Mittellagenplatte;
- **Fig.18**: Schnitt durch ein Parkettelement; und
- **Fig. 19**: Isometrie einer erfindungsgemäßen Platte mit der Darstellung von Teilschnitten.

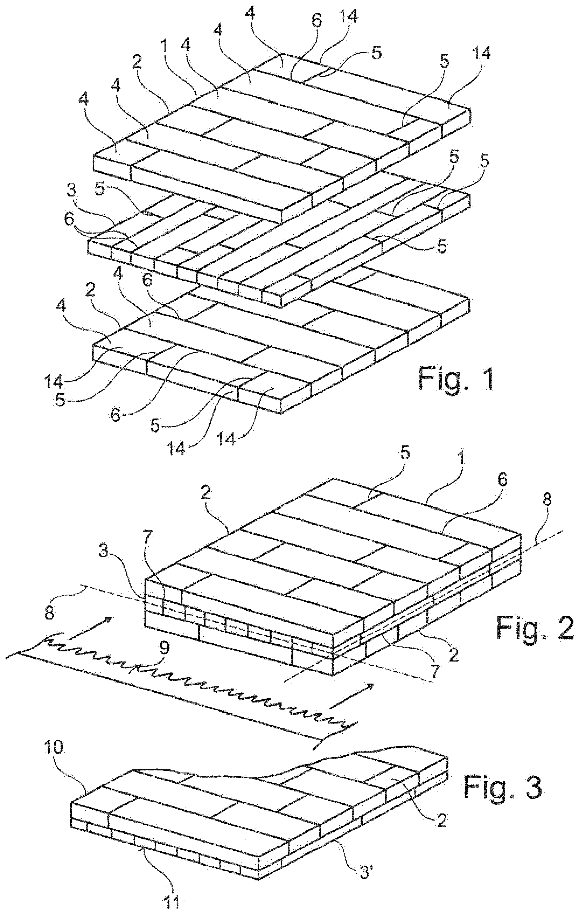

**Fig.** 1 zeigt eine Explosionszeichnung eines erfindungsgemäßen Holzbauelements in Form einer Platte 1 in isometrischer Darstellung, gezeigt in Zusammenhang in Anwendung des erfindungsgemäßen Verfahrens.

Die erfindungsgemäße Platte wie in der Fig. 1 dargestellt besteht aus einzelnen Lamellen 14 die mit ihren Enden mit Stumpfstoß 5 in Längsausrichtung aneinander liegen und die Decklage mit Stumpfstoß 2 bilden.

Die Mittellage mit Stumpfstoß 3 besteht aus einzelnen Lamellen 14 die in mit Ihren Enden mit Stumpfstoß 5 in Längsausrichtung aneinander liegen und die Mittellage mit Stumpfstoß 3 bilden.

Die zweite Decklage mit Stumpfstoß 2 besteht aus einzelnen Lamellen 14 die einen Lamellenstrang 4 bilden und mit ihren Enden mit Stumpfstoß 5 in Längsausrichtung aneinander liegen.

Die Lamellenstränge 4 werden dabei mit Ihren Seitenflächen durch ein geeignetes Bindemittel miteinander fest verbunden und bilden die Decklage mit Stumpfstoß 2. Die Mittellage mit Stumpfstoß 3 kann dabei völlig andere Dimensionen in der Breite und Dicke der Lamellen 14 aufweisen, um in der Anwendung der Mehrschichtplatten eine gewünschte Plattenstärke zu erhalten.

Die Decklage mit Stumpfstoß 2, Mittellage mit Stumpfstoß 3 und die zweite Decklage mit Stumpfstoß 2 bilden miteinander in den Faserrichtungen der Lamellen im rechten Winkel zueinander versetzt und in den Auflageflächen durch eine Bindemittelschicht 6 fest miteinander verbunden die erfindungsgemäße Platte 1.

Alle Plattenschichten sind dabei erfindungsgemäß mit Stumpfstößen 5 in Längsrichtung aneinander liegend fest miteinander durch eine Bindemittelschicht 6 verbunden.

Mit anderen Worten läuft das Verfahren zur Herstellung des Holzbauelementes, hier der Platte 1, mit den folgenden Schritten ab:
Es wird eine Mehrschichtplatte ausgebildet, wobei eine erste Schicht 2 der Platte 1 aus zumindest teilweise miteinander mit einem Bindemittel fest miteinander verbundenen Stäbchen 14 bzw. Lamellen 14 gebildet wird, wobei in der ersten Schicht 2 die Stäbchen 14 in Längsrichtung versetzt zueinander angeordnet und stumpf gestoßen zum in Längsrichtung angrenzenden Stäbchen 14 angeordnet werden.

Weiter wird eine zweite Schicht 3 auf der ersten Schicht 2 aufgesetzt und mit dieser verleimt, die ebenfalls aus zumindest teilweise miteinander verleimten Stäbchen gebildet wird, wobei in der zweiten Schicht die Stäbchen in Längsrichtung versetzt zueinander angeordnet und stumpf gestoßen zum in Längsrichtung angrenzenden Stäbchen angeordnet werden und wobei die zweite Schicht 3 in Faserrichtung versetzt zur ersten Schicht 2 angeordnet ist.

Weiter wird wenigstens eine dritte Schicht 2 auf der zweiten Schicht 3 aufgesetzt wird, so dass die zweite Schicht 3 zwischen der ersten Schicht 2 und der dritten Schicht 2 angeordnet ist, und mit dieser verleimt wird, die ebenfalls aus zumindest teilweise miteinander verleimten Stäbchen 14 gebildet wird, wobei in der dritten Schicht die Stäbchen 14 in Längsrichtung versetzt zueinander angeordnet und stumpf gestoßen zum in Längsrichtung angrenzenden Stäbchen angeordnet werden und wobei die dritte Schicht 3 in Faserrichtung versetzt zur zweiten Schicht angeordnet ist. Die erste Schicht 2 und die dritte Schicht 2 sind identisch aufgebaut und orientiert. Wie weiter ersichtlich ist, sind bei einem benachbarten Schichtenpaar, also hier von erster Schicht 2 zu zweiter Schicht 3 und von zweiter Schicht 3 zu dritter Schicht 2, die jeweiligen Faserrichtungen senkrecht zueinander angeordnet.

Die Bretter oder Stäbchen in der zweiten Schicht bzw. in der Mittelschicht 3 haben andere Abmessungen als die Bretter oder Stäbchen 14 in den benachbarten Schichten 2, insbesondere sind die Stäbchen dieser Mittelschicht 3 kleiner in ihren Abmessungen. Die Bretter oder Stäbchen eine minimale Länge von 100 mm aufweisen können. Jede Schicht 2, 3 besteht aus stumpfgestoßenen Brett- oder Stäbchenlagen.

In Fig. 2 ist eine aus drei Schichten verleimte erfindungsgemäße Platte 1 gezeigt. Bei diesen Platten zeigen allen verwendeten Schichten Stumpfstöße 5 auf.

Zur Weiterverarbeitung kann die Platten vorteilhaft an der Schnittlinie in der Mittellage mit Stumpfstoß 3 in zwei Platten aufgeteilt werden.

Die Auftrennung erfolgt in Faserrichtung der zweiten Schicht 3 (Mittellage mit Stumpfstoß 3).

Vorteilhaft wird diese Aufteilung mittels eines Trennwerkzeuges 9 ausgeführt. Je nach Schnittlänge können Kreissägen oder wie in der **Fig. 2** dargestellt eine Trennbandsäge verwendet werden.

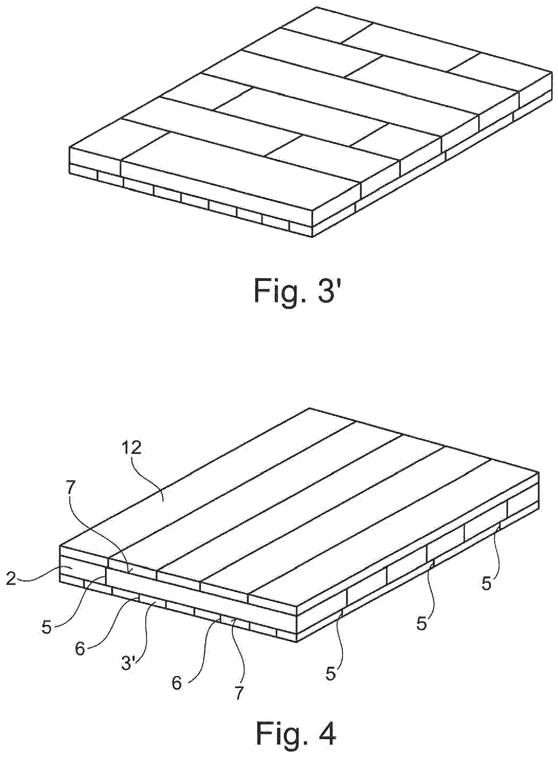

**Fig. 3** und **Fig. 3'** zeigen eine Weiterverarbeitung einer Platte. In **Fig. 4** ist eine nicht erfindungsgemäße eine Variante der Weiterverarbeitung dargestellt.

Als Deckschicht wurde auf die Platte gemäß Fig. 3 eine Decklage ohne Stumpfstoß 5 aufgebracht.

Die Decklage mit Stumpfstoß 2 wurde dabei zur Mittellage und die Mittellagen mit Stumpfstoß 3 wurde zum Gegenzug mit den erfindungsgemäßen Stumpfstößen 5. Die Plattenebenen sind mit einer Flächenverklebung 7 verbunden und stellen ein fertiges Produkt dar.

Für die Herstellung der erfindungsgemäßen Platte 1 werden die Deck- und Mittellage mit Stumpfstoß 3 durch Hobeln und Kappen der Lamellen 14 erzeugt.

Dabei werden aus langen eingangs Lamellen alle groben Fehler ausgekappt.

Die Kappung der eingangsseitigen Lamellen erfolgt auf einer Fehlerkappanlage, die nicht dargestellt ist.

Die einzelnen Abschnitte bilden die Lamellen 14 und werden dann in Längsrichtung hintereinanderliegend in eine kanalförmige Bahn gefördert.

Um die exakte Länge der später für die Deck- und Mittellagen mit Stumpfstoß 3 benötigten Länge abzukürzen werden die Lamellen 14 mit einer zweiten vorteilhaften Untertischkreissäge exakt auf Länge abgeschnitten.

Der Ablauf dieser Aufbereitung der Lamellen 14 ist seit langem bekannt und die zu bildenden Lamellenstränge 4 werden gegen einen fixen Anschlag exakt mit einer Untertischkappsäge abgeschnitten.

Alle Lamellenstränge 4 erhalten dadurch eine exakte Länge ohne Toleranzen, wie sie sich durch die nur rechnerische Aufaddierung der Lamellen 14 ergeben würden. Durch eine intelligente Vermessung der Lamellen 14 und eingebaute Lichttaster wird überwacht, dass die Endlängen am Anfang und am Ende des Kanals, eine vorgegebene Mindestlänge nicht unterschreiten.

Eine aufwendige, teure Optimierung und Verrechnung der Einzellängen werden dadurch vermieden. Diese Herstellmethode ist nicht dargestellt und entspricht dem Stand der Technik.

Sollte durch die Vermessung die gewünschte eingestellte Gesamtlänge nicht erreicht werden, kann die Lamelle in einen der nachfolgenden Stränge eingefahren werden und kann bereits für den nächsten Lamellenstrang verwendet werden. Mit dieser Methode werden, zu kurze Abschnitte von Lamellen 14 vermieden, und die gegebenen Eingangslängen am besten ausgenutzt mit minimalem Verschnitt. Wenn der erste Lamellenstrang 4 gebildet ist und die letzte Lamelle 14 exakt auf Länge durch die Untertischkreissäge abgeschnitten ist, wird diese in den nachfolgenden Kanal eingefahren und bildet den Anfang der nächsten Lage oder stößt auf das Ende der bereits eingefahrenen Lamellen 14 wie oben beschrieben und bildet einen Teil des nächsten Lamellenstranges 4. Dadurch werden Abschnitte vermieden und die Ausbeute erhöht.

Aus den in den Kanälen eingefahrenen Lammellensträngen 4 werden durch Quertakten so viele Lamellenstränge 4 seitlich aneinanderliegend gebildet, dass diese eine Lagen bildenden Lamellenstränge mittels eines Stapelgerätes zu einem Großpaket aufeinandergestapelt werden.

Damit die Lamellen 14 in einen Zwischenpuffer transportiert werden können werden die Lamellenlagen im Stapelautomat auf eine Schonplatte oder Palette gestapelt und können problemlos zum nächsten Bearbeitungsschritt transportiert werden. Durch das Zwischenlager kann die Produktion der Lamellen mit optimaler Geschwindigkeit erfolgen. Produktionsunterbrechungen im Zuschnitt, die durch schlechte Qualitäten der Lamellen verursacht werden, führen dadurch nicht zu Stopps in der nächsten Bearbeitungsstufe.

Die Vorrichtungen zum Verpressen der Blöcke 15 ist nicht zeichnerisch dargestellt und wird nachfolgend beschrieben.

Die Stapel mit den vorbereiteten Lamellenlagen mit den Lamellensträngen 4 werden jetzt in die Aufgabeposition vor der Verleimpresse positioniert.

Mittels eines geeigneten Greifersystems vorteilhaft eines Saugkissen werden die Lamellenstränge 4 angehoben und ein oder mehrere Lamellenstränge 4 in ein Fächertransport vor der Presse abgelegt.

Das Greifsystem kann in mehreren einzelnen Saugkissen aufgeteilt werden, um die Lamellen durch seitliches Verfahren der Saugkissen in mehrere Fächer des nachfolgenden Fächersystems einzulegen.

In der nachfolgenden Beleimung werden ein Bindemittel auf die einzelne oder mehreren Lamellenstränge 4 gleichzeitig aufgetragen. Dabei wird die erste Lamellenlage nicht mit Bindemittel versehen. Wenn Lamellenlagen nicht mit Bindemittel versehen werden, entsteht eine Leerfuge, um gewünschte vordefinierte Anzahlen von Lamellenstränge 4 zu verbinden, um vordefinierte Anzahlen von Lamellenstränge 4 zu bilden, die einen Block ergeben.

Die beleimten Lamellenstränge 4 werden dann in die Presse eingeschoben und in der Presse um 90° aufgestellt und durch eine geeignete Aufstellvorrichtung auf der Seitenfläche liegend in die Presse getaktet. Dabei wird in der Presse jeder Lamellenstrang 4 exakt durch einen geeigneten Oberdruck gerade ausgedrückt, um Überstände in der Höhe gegenüber den vorgehenden Lamellen zu vermeiden.

Erst wenn sich genügend Lamellen in der Presse befinden wird die Presse mit seitlichen Druckelementen geschlossen. Bevor der benötigte Pressdruck aufgebaut wird, werden durch eine stirnseitig angebrachte Pressvorrichtung die Lamellenstränge 4 in Längsrichtung gegen einen Anschlag gepresst, um eventuelle Lücken an mit den Stirnseiten aneinanderliegenden Lamellen14 zusammenzuschieben, dadurch wird vermieden, dass durch die Transportbewegung entstandenen Abstände zwischen den Stumpfstößen 5 später Lücken zwischen den Lamellen 14 verbleiben.

Erst jetzt wird der benötigte Pressdruck seitlich auf die Blöcke 15 aufgebaut und somit die Blöcke 15 dicht in den Stirnseiten und seitlichen Flächen verpresst. Der Gegenanschlag in Längsrichtung ist wegschwenkbar ausgeführt, damit die verpressten Blöcke 15 in Längsrichtung aus der Presse herausgefördert werden können.

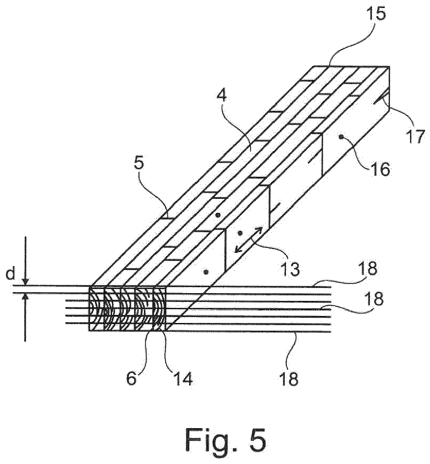

Die gepressten Blöcke 15 sind beispielhaft in der **Fig. 5** dargestellt, bei der die Anzahl der Lamellenstränge 4 die Blockbreite ergeben. Bei den Lamellenstränge 4, die in Faserrichtung 13 hintereinandergelegt sind, sind die Holzfehler wie Äste 16 und Risse 17 weitestgehend in den einzelnen Lamellen 4 verblieben.

Durch die Verbindung mit der Bindemittelschicht 6 der einzelnen Lamellenstränge 4 werden die Holzfehler fixiert und können keine Störungen beim Auftrennen oder Weiterverarbeiten ergeben. Deshalb werden nur grobe Fehler aus der Ausgangsschnittware herausgesägt.

Um aus den Blöcken 15 Platten zu erzeugen werden an diese in Faserrichtung 13 anhand der Schnittlinien 18 aufgetrennt. Die Abschnitte bilden die späteren Decklagen mit Stumpfstoß 2 oder Mittellage mit Stumpfstoß 3 und weisen je nach Schnittführung eine Dicke d auf. Je nach Schnittdicke d können unterschiedliche Dicken der fertigen erfindungsgemäße Platte 1 hergestellt werden.

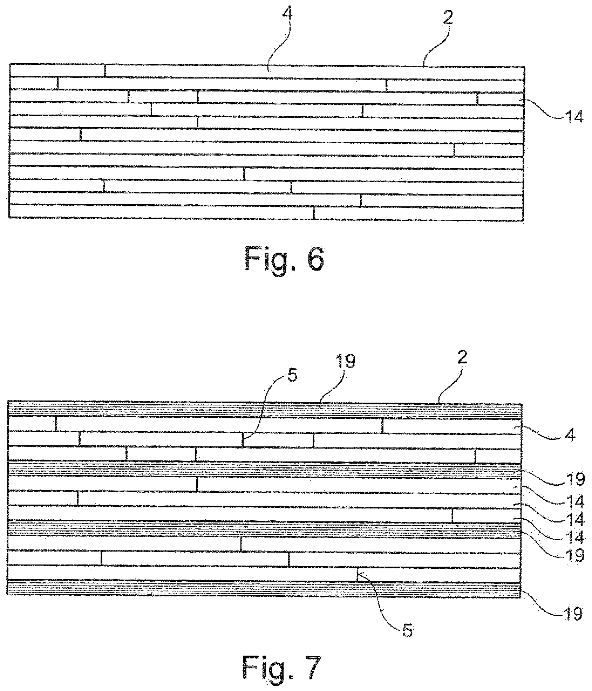

Werden diese Abschnitte aus den Block 15 mit einer Dicke d wiederum an ihren Seitenfläche aneinanderliegend, mit einer Bindemittelschicht fest miteinander verbunden dann entsteht wie in **Fig.6** gezeigt beispielsweise eine Decklage mit Stumpfstoß 2 oder Mittellage mit Stumpfstoß 3. Die Vorrichtung für diese Verbindung ist nicht dargestellt da dieser Arbeitsschritt mittels einer handelsübliche Presse erfolgt wie sie auch für die Produktion von Massivholzplatten benutzt wird.

In **Fig. 7** wird eine Platte gezeigt, die Lamellenlagen mit durchgehenden Lamellen zeigt, die keilgezinkt oder durchgehend sind, um eine bessere Zugfestigkeit der Platten zu erhalten. Solche Platten können für statische Anwendungen hergestellt werden. Die Festigkeitswerte solcher Platten sind durch die hohe Genauigkeit der Auftrennung der Blöcke und die geringen Toleranzen der zugeschnittenen und verbundenen Lamellenstränge deutlich höher als herkömmlich aus einzeln zugeschnittenen Stäbchen gebildete Platten. Solche Platten weisen bessere Festigkeitseigenschaften und bessere Toleranzen als herkömmlich gefertigte Platten auf.

In **Fig. 7** wird eine Platte dargestellt, bei der im Ausgangsblock 15 in der passenden Lage im Wechsel Lamellenstränge 4 zusammen mit Fixlängen 19 von Lamellen 4 gebildet wurden. Diese Kombinationen von durchgehenden Fixlängen 19 und Lamellenstränge 4 mit Stumpfstoß 5 dienen der erhöhten Festigkeit insbesondere erhöhter Zugfestigkeit. Je nach statischer Anforderung kann dabei die Anzahl solcher Fixlängen 9 innerhalb der Platten gewählt werden.

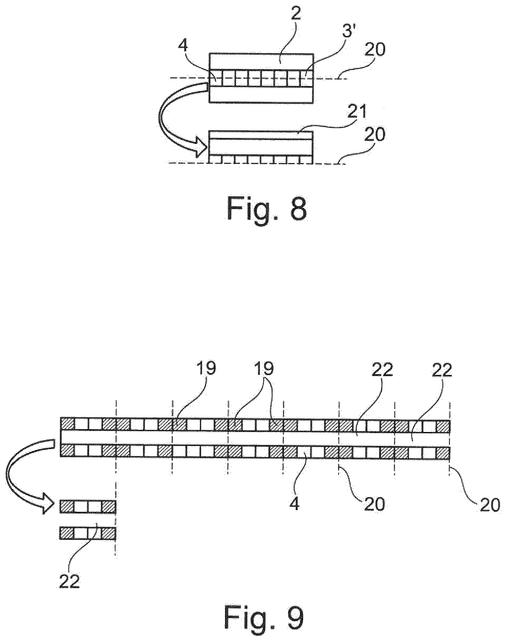

In der **Fig. 8** erfolgt die Aufteilung der erfindungsgemäßen Platte in zwei Platten mit jeweils 2 Schichten die als Grundlage für eine spätere Verwendung als Mittellage mit Stumpfstoß 3' mit Gegenzug beispielsweise in der Parkett Herstellung Verwendung findet.

Dargestellt ist der Arbeitsablauf, bei dem die Decklage mit Stumpfstoß 2 in einem weiteren Arbeitsschritt auf die zweischichtige Mittellage mit Stumpfstoß 3' mit Gegenzug mittels Bindemittel durch Pressvorgang fest miteinander verbunden wird.

Durch die geeignete Dicke d der aufzutrennenden Mittellage mit Stumpfstoß 3' kann somit eine sehr dünne Schicht des Gegenzugs hergestellt werden, die in der Praxis bisher nur durch durchgehende Lamellen oder dünne Furniere erzeugt werden kann. Die Trennlinie 20 wird dabei vorteilhaft mittig geführt um zwei gleich dicke Plattenteile zu erhalten.

Solche durchgehenden dünne Lamellen 3' sind in der Herstellung teuer und schwierig in der Handhabung.

Durch das Auftrennen nach Trennlinie 20 entstehen zwei Platten. Dabei wird die Decklage mit Stumpfstoß 2 als Klebefläche für eine Parkettdeckschicht 21 verwendet, die ursprüngliche Mittellage mit Stumpfstoß 3' ergibt dadurch den Gegenzug des Parketts.

Durch die hochwertige und von bester Formgenauigkeit produzierten erfindungsgemäßen Platten- und Mittellage mit Stumpfstoß 3 erhöht sich Qualität der Parkettdielen erheblich und die Dicken der Parkettdeckschichten 21 können wesentlich dünner ausgeführt werden. Eine erhöhte Wirtschaftlichkeit durch Materialeinsparung und erhöhte Qualitäten der fertigen Parkettdielen sind dadurch möglich.

In der **Fig. 9** ist die Herstellung von Fertighausstiele 22 (d.h. z.B. Holzständer für Fertighäuser, wobei die Holzständer die tragende Konstruktion für das Haus ausbilden) dargestellt. Fertighausstiele 22 sind statisch belastete Bauteile, die in Hausbau und Holzkonstruktionen in Wandelementen eingesetzt werden.

Üblicherweise bestehen solche Stiele aus Massivholz und werden technisch getrocknet. Die technische Trocknung größerer Querschnitte stellt dabei in Bezug auf die langen Verweilzeiten in den Trocknungsanlagen und die notweniger Weise schonende Fahrweise, um Trocknungsschäden zu vermeiden, einen hohen Aufwand dar. Gewünschte Endfeuchten von ca. 10% Holzfeuchte werden nicht immer gleichmäßig erreicht, da größere Querschnitte bekanntlich schwierig zu trocknen sind.

Mit der erfindungsgemäßen Methode, nämlich Platten aus kleineren Schnittholzquerschnitten zu produzieren sind, Trocknungsschäden nur in sehr geringem Maße zu erwarten.

Durch Verleimen der Decklage mit Stumpfstoß 2 und Mittellage mit Stumpfstoß 3 mit durchgehenden Lamellen als Fixlängen 19 nach **Fig. 7** ist die Festigkeit deutlich erhöht und die Fertighausstiele 22 können mit geringeren Querschnitten eingesetzt werden bei gleichen Festigkeiten.

Fertighausstiele 22 werden in den Wandaufbauten auf Druck belastet, sodass die fest aneinanderliegenden Stirnflächen innerhalb der Lamellenstränge 4 Druckbelastungen direkt übertragen können.

Um Ausknicken zu vermeiden werden in der Produktion, Blöcke 15 siehe Fig. 5 mit durchgehenden oder in Längsrichtung der Lamellen mit Keilzinkenstöße verbundene Lamellenstränge 4 oder Fixlängen 19 separat eingebracht, dass sich nach der Aufteilung die durchgehenden Lamellenstränge 4 oder Fixlängen 19 beispielsweise an den 4 Ecken der Fertighausstiele auffinden.

Diese Lage der keilgezinkten durchgehenden Lamellenstränge oder Fixlängen 19, ergeben die gewünschten Festigkeitswerte der Fertighausstiele 22. Solche Fertighausstiele 22 zeichnen sich durch hohe Festigkeiten, exakte Maßhaltigkeit und gleichmäßige Feuchtigkeitswerte gegenüber den aus Massivholz gefertigten Fertighausstielen aus. Die Herstellung dieser Fertighausstile erfolgt durch auftrennen der erfindungsgemäßen Platten 1 entlang der Faserrichtung der Decklage mit Stumpfstoß 3 in der Schnittführung der Trennlinie 20.

Die Fixlängen 19 bilden nach dem Auftrennen im Fertighausstil die 4 Ecken und sind aus statischen Gründen optimal platziert.

Je nach Kombination der Fixlängen 19 können aus den erfindungsgemäßen Platten 1 verschiedenste Fertigprodukte hergestellt werden. Dabei sind an den Plattenoberflächen sowohl durchgehenden Fixlängen 19 in Kombination mit Stumpfstoß 5 möglich. Je nach Anwendung für beispielsweise Fassadenelemente, Dielen, Blockhausprofile Möbelplatten, oder Regalböden kann die erfindungsgemäßen Platten 1 aufgetrennt und als Grundelement verwendet werden. Dabei ist die in **Fig. 8** gezeigte Auftrennung besonders vorteilhaft, da sehr dünne Lagen mit Stumpfstoß erzeugt werden können. Solche dünnen Lagen sind derzeit in der Praxis nicht oder nur schwer herstellbar mit geringer Qualität. Ein Einsatz für die Produktion von dünnen Regalbrettern, mit einer Deckschicht mit Fixlängen 19 und einer Stärke von unter 10 mm mit dreischichtigem Aufbau ist damit möglich.

Nicht dargestellt ist die Verleimung von Decklage mit Stumpfstoß 2, Mittellage mit Stumpfstoß 3 zu einem mehrschichtigen Aufbau, je nach gewünschter Dicke von kreuzweise verleimten Platten mit 2, 3, 4, 5, 6, oder mehr Schichten, wobei vorteilhaft ungerade Schichtanzahlen zu wählen sind um Verwinden der Platten in der Plattenebene zu vermeiden. Wenn solche mehrschichtigen erfindungsgemäße Platten 1 mit Stumpfstoß 5 hergestellt werden sind in der Ausführung beispielsweise Fertighausstile 22, mit jeder gewünschten Dicke möglich.

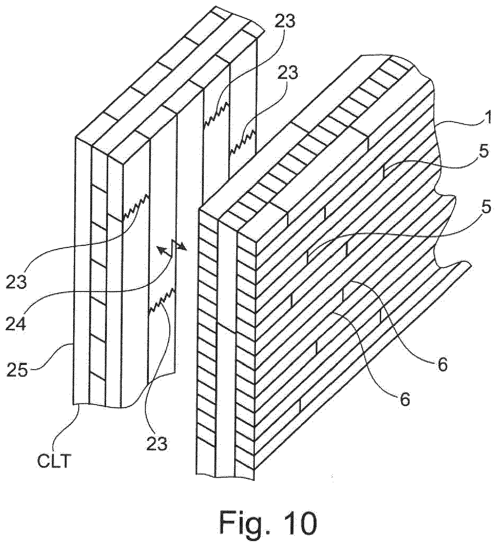

Die **Fig. 10** zeigt eine erfindungsgemäße Platte 1 die durch eine reine Montageverbindung 24 fest mit einer der Statik entsprechenden CLT Wand 25 verbunden wird.

Die Montageverbindung kann durch eine Bindemittelschicht oder mechanisch mittels Schrauben, geeigneten Nägel und dergleichen, ausgeführt werden. Die CLT Wand 25 besteht aus den, den Vorschriften entsprechenden Schnittholzdimensionen, die in Längsrichtung durch eine Keilzinkenverbindung 23 fest verbunden sind. In der dargestellten **Fig. 10** weist die erfindungsgemäße Platte 1 produktionsbedingt Schmalseitenverklebungen mit einer Bindemittelschicht 6 auf sowie Deck- und Mittellagen mit Stumpfstoß 2,3 auf, während die CLT Platte 25 ohne Schmalseitenverklebung ausgeführt ist.

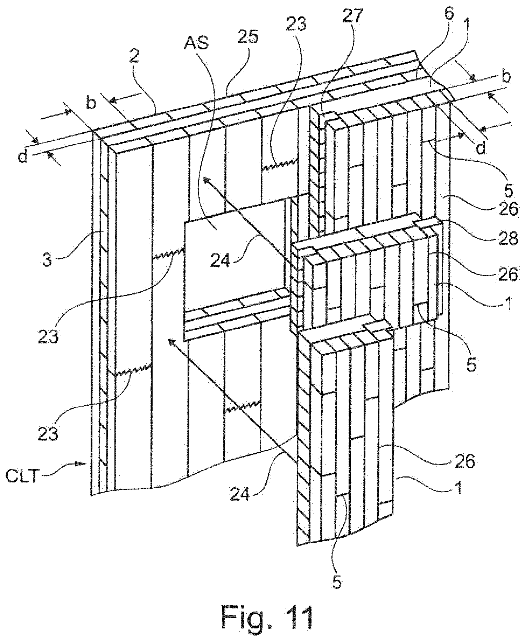

In **Fig. 11** ist eine CLT Wand 25 abgebildet die mir einer vorgesetzten Schale, bestehend aus der erfindungsgemäßen Platte 1 zusammengesetzt wird.

Die CLT Wand 25 besteht aus zwei Decklagen mit Stumpfstoß 2 die gemäß den DIN Normen aus statischen Gründen aus Lamellenlagen mit Keilzinkenverbindungen 23 hergestellt wurde, wobei die Lamellen dem normgerechten Verhältnis aus Breite b zur Dicke d entsprechen und keilgezinkt werden müssen.

Die vorgesetzte erfindungsgemäße Platten 1 müssen nicht dieser Norm und vor Allem nicht dem Breiten und Dickenverhältnis entsprechen und können aus den verfügbaren Schnitthölzern mit minderer Qualität gebildet werden, da sie keine statische Funktion erfüllen müssen. Die Aufdopplung der vorgesetzten Schale erfolgt vorteilhaft aus Gründen des besseren Raumklimas, der deutlich verbesserten Wärmedämmwirkung, der besseren Luftundurchlässigkeit und der verbesserten Schallschutzeigenschaften etc. von dickeren Wandelementen aus Holz. Die Ausschnitte AS werden für Fenster oder Türen in die CLT Wand 25 üblicherweise eingefräst.

Die vorgesetzte erfindungsgemäße Platte 1 kann jedoch wie in **Fig. 11** gezeigt, in diesem Ausführungsbeispiel aus einzelnen Segmenten 26 zusammengesetzt werden und entspricht dadurch der gewünschten Form der fertigen CLT Wand 25. Die beispielsweise mittels Nut 28 und Feder 27 verbundene vorgesetzte Wandelemente aus der erfindungsgemäßen Platte 1, spart durch die einzelnen Segmente 26 Material ein da Öffnungen freibleiben. In der Herstellung ist dieses vorgesetzte Wandelement leicht zusammenzusetzen und mittels Montageverbindung 24 fest mit der CLT Wand 25 zu verbinden. Es entsteht dadurch ein dickeres Wandelement das kostengünstig, durch den mehrteiligen Aufbau hergestellt werden kann und keine komplett den Normen gerechten Ausführung der CLT Wände genügen muss, vorausgesetzt die statischen Anforderungen werden bereits durch die CLT Wand 25, unter Berücksichtigung des zusätzlichen Gewichtsanteils der erfindungsgemäßen Platte 1 erreicht.

Statisch ist nur das Gewicht der vorgesetzten Wandelemente zu berücksichtigen, da sie keine statische Funktion übernimmt. Wenn die vorgesetzte Schale/ Wandelement nur auf Druck belastet wird, kann das zusätzlich Gewicht sogar statisch vernachlässigt werden und wird allen erforderlichen statischen Nachweisen genügen.

Durch eine geeignete Wahl der Montageverbindung beispielsweise mittels Bindemittelschicht 6, kann die zusätzliche gewonnene statische Festigkeit durch Test und den entsprechenden Nachweisen zu Zertifikaten führen, die die Stabilität der CLT Wand 25 sogar signifikant erhöhen wird. Der kostenmäßige Mehraufwand für die

Keilzinkenverbindungen und besserer Holzqualitäten kann dadurch vermieden werden, obwohl dickere Bauteile produziert werden können. Die Ergänzung eines zusätzlichen Wandelements mit den erfindungsgemäßen Platten 1 erhöht die Qualität der zusammengesetzten Wandelemente entscheidend. Das Schwind- und Quellverhalten von breiter Brettware insbesondere Seitenware beträgt in tangentialer Richtung ca. 5% während es radialer Richtung des Jahrringverlaufes nur ca. 3 % beträgt. Der Anteil von stehenden Jahresringen in der erfindungsgemäßen Platte 1 ist deutlich höher, siehe auch die Schnittführung gemäß **Fig. 5** und ergibt qualitativ hochwertige Platten die deutlich weniger Schwind- und Quellverhalten aufweisen. Platten mit einem hohen Anteil stehenden Jahresringer ergeben hohe Festigkeiten und verformen sich auf Grund des geringeren Schwind- und Quellverhaltens in allen Plattenebenen bedeutend weniger als Platten aus breiter Brettware und liegenden Jahresringen. Nahezu verzugsfreie erfindungsgemäße Platten 1 sind zu erwarten.

Auf Grund der segmentweisen Aufbringung mittels Montageverbindung auf herkömmlichen CLT Platten können die maximalen Breiten und Längen der erfindungsgemäßen Platten 1 ein Bruchteil der üblichen Formate der CLT Wände 25 aufweisen. CLT Wände 25 werden beispielsweise mit einer Länge von 13 m und einer Breite von 3 m hergestellt. Durch die einzeln zu formatierenden Segmente genügt eine Plattenpresse beispielsweise im Format 3x3m oder auch nur 1,4 x 3m, um nur zwei Großen beispielhaft zu nennen und es bleiben weniger ungenutzte Abschnitte übrig. Die kleineren Formate sparen dadurch erhebliche Anlagenkosten ein und können somit preiswerter hergestellt werden als großformatige CLT Wandelemente

Eine weitere Einsatzmöglichkeit ist die Verwendung dieser Platten in der Ständerbauweise von Häusern. Hier können die Ständerwände statisch so ausgelegt werden, dass beispielsweise in den Zwischenräumen der Ständer, die erfindungsgemäße Platten Verwendung finden. Wenn die Ständerzwischenräume oder Gefache mit solchen Plattenabschnitten versehen werden, erzielt man die gleichen Vorteile wie bei einer Vollholzwand, jedoch mit deutlich verbesserten Quellund Schwindverhalten der Bauteile. Weiterhin gelten auch hier die deutlich verbesserten Eigenschaften wie sie in der Verbindung mit einer CLT Wand 25 bereits erläutert wurden. Solche Ausfachungen mit der erfindungsgemäßen Platte 1, binden im Gegensatz zu üblichen Wärmedämmungen aus Fasermaterialien, enorme Mengen an C02 und das sehr langfristig. Eine C02 Senke in Form von Vollholzgefachen, in Verbindung mit der Ständerbauweise von Häusern, ist eine wichtige und nachhaltige Maßnahme für den Umweltschutz. In Verbindung mit einer Ständerwand werden die unerwünschten Wärmebrücken vermieden, die durch die übliche Ausfachung der Ständerwände zwischen den Ständern mit Dämmmaterial entstehen. Diese Ausfachungen können in der Herstellung der Ständerwände sehr einfach erfolgen, da in den Legetischen die Segmente einfach eingelegt werden können. Der unerwünschte Nachteil von Setzungen der eingebrachten Dämmmaterialien innerhalb der Ständerwände wird dadurch vermieden und homogene feststehende und stabile Wandelemente entstehen, bei denen an jeglicher Stelle Befestigungen, mittels einfachen Schrauben möglich ist. Natürlich gilt dies nicht nur für die Außenwände im Holzhausbau, sondern kann vorteilhaft auch im Innenbereich ganz oder teilweise eingesetzt werden.

Die dargestellte vorgesetzte Schale in **Fig. 11** aus zwei Deckschichten 2 ist nur ein Ausführungsbeispiel und kann je nach gewünschter Eigenschaft aus mehreren Lagen der erfindungsgemäßen Platte 1 mit Stumpfstößen 5 ausgeführt werden.

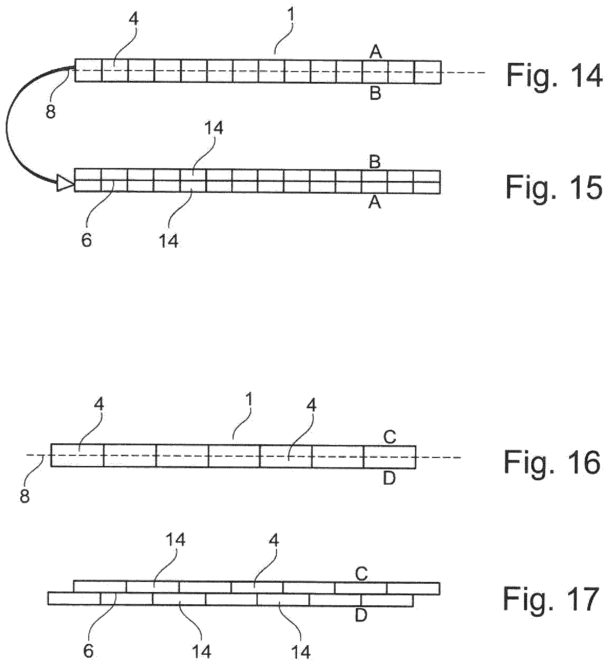

Beschreibung der Variante mit Auftrennen der Platten in der Plattenebene und anschließender Verbindung:
Zur Produktion von Platten mit erhöhter Festigkeit ist das Verfahren der erfindungsgemäßen Platte 1 ideal geeignet, wenn diese mittig in der Plattenebene zu zwei Hälften A und B aufgetrennt und dann eine Plattenhälfte A gedreht wird und mit der Plattenhälfte B wieder in der Plattenebene flächig mittels Bindemittel fest miteinander verbunden wird, wie die **Fig. 14** und **Fig. 15** zeigen.

Es wird also eine der Plattenhälften mit anderer Orientierung an der zweiten Plattenhälfte angeordnet und mittels einer Bindemittelschicht fest miteinander verbunden.

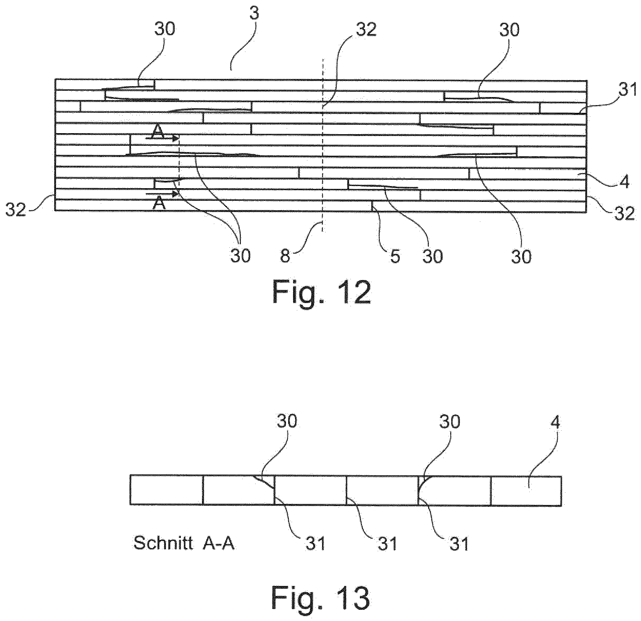

Die bestechenden Vorteile dieser verbundenen Platten sind wie folgende. Risse oder Äste und weitere Fehlstellen wie Waldkanten oder die Stumpfstoßverbindungen in den einzelnen Lamellensträngen 4, werden durch das Auftrennen und Drehen der Plattenhälften A und B jeweils an anderen Stellen platziert und dadurch fest mit einander verbunden. Waldkanten 30, siehe **Fig. 12** und **Fig. 13**, können so ideal ins Innere der verbundenen Plattenhälften A und B gelegt werden und liegen nicht mehr an den sichtbaren Außenflächen der Platten. Die Stumpfstöße 5 wie andere Fehlstellen beispielsweise Äste oder Risse werden dadurch versetzt. Ein Verbinden ist auch mit verschiedenen Platten möglich wenn die Plattenhälften A mit einer dritten Plattenhälfte X (nicht dargestellt) verbunden wird und Plattenhälften B mit einer vierten Plattenhälfte X1 (nicht dargestellt) verbunden wird.

In der **Fig. 14 und 15** wird die Plattenhälfte A um die Längsachse der Lamellenlängsrichtung gedreht und mit der Hälfte B durch die Bindemittelschicht 6 fest verbunden. Dadurch entsteht ein neuer Plattenaufbau, der in allen Beanspruchungsebenen höhere Festigkeiten aufweist. Solche Platten eignen sich ideal als Mittellagen für einen mehrschichtigen Plattenaufbau. Beispielsweise Dreischichtplatten werden dadurch zu einer Vierschichtplatte, die in der Mittellage erhöhte Festigkeiten aufweist.

Besonders bei Anwendungen wo es auf die Rollschubfestigkeit ankommt besitzen solche Platten erhöhte Festigkeiten. Als Rollschub werden Schubspannungen bezeichnet die rechtwinklig zur Faserrichtung des Holzes bei Biegebeanspruchungen entstehen, wenn Mehrschichtplatten mit Kräften in der Plattenebene beaufschlagt werden. Für die Festigkeit der Mehrschichtplatten ist der Rollschub eine wichtige Größe für die steifigkeitsrelevanten Eigenschaften von Mehrschichtplatten. Der Rollschub wird durch die Festigkeiten der einzelnen Lamellen beeinflusst.

Aicher (2000) weist durch FE-Rechnungen nach, dass Jahrringlagen, die von einer exakt radialen-tangentialen Ausrichtung gegenüber den Holzrändern abweichen, den (scheinbaren) Schubmodul, bezogen auf die Ränder deutlich erhöhen. Er gibt in seiner Zusammenfassung an, dass der scheinbare Schubmodul um bis zu viermal so groß sein kann, wenn gegenüber der reinen radial-tangentialen Ausrichtung realistische Jahrringkonfigurationen (stehende Jahrringe) vorliegen. Als stehende Jahresringe wird die Jahrringlage senkrecht zur Plattenebene bezeichnet.

Die Plattenmittellagen die durch die stumpfgestoßenen Blockverleimung hergestellt wird, kann für solche Anwendungen aus Seitenware hergestellt werden bei der durch die Auftrennung der Lagen rein stehende Jahrringe entstehen, siehe dazu **Fig. 5** mit Lamellen 14. Wenn durch die Untersuchungen von Aicher bis viermal so hohe Festigkeitseigenschaften erwartet werden können, ergibt sich zusätzlich durch die beschriebene Auftrennung eine nachweislich höchst mögliche zu erwartende Festigkeiten solcher Plattenmittellagen.

Diese Methode eignet sich hervorragend, um mindere Qualitäten von Schnittholz und Seitenware zu verarbeiten. In Zukunft können solche minderen Qualitäten von Schnittholz ideal weiterverarbeitet und hervorragend wertgeschöpft werden.

Stegplatten von Trägern die mit zwei Gurten fest verbunden sind, von statisch belasteten Bauteilen können dadurch mit geringeren Dicken in der Mittellagen ausgeführt werden, bei gleichen oder sogar höheren Festigkeiten der gesamten Platten. Durch diese Art der Produktion sind höhere Festigkeiten und Tragkraft zu erreichen und es kann Material eingespart werden. Wenn Dreischichtplatten mit einer Massivholzmittellage aus einer Schicht hergestellt werden, dann schwächen Fehlstellen wie fehlerhafte seitliche Verleimung der Lamellen, Risse, Äste, Waldkanten, übergroße Jahrringbreiten, Jahrringlagen, um einige Schwachstellen zu nennen, erheblich die Festigkeiten solcher statisch belasteter Bauteile. Die Herstellung von dünnen Platten und die Verbindung zu einer zweischichtigen Platte ist sehr aufwändig.

Das beschrieben Verfahren, Mittellagen mit Stumpfstoß 3 in der Plattenebene zu trennen in Plattenhälften A und B und dann zu drehen oder mit anderen mittig getrennten Platten zu verbinden, ist in der Herstellung weniger aufwändig und erfordert lediglich einen zusätzlichen Arbeitsschritt. Der Schnittverlust entlang der Schnittlinie 8 wird durch die entstehende höhere Festigkeit bei weiten kompensiert, da der Plattenaufbau in Verbindung mit Decklagen viel geringere Dicken aufweisen kann, bei gleicher oder sogar höherer statischen Festigkeit (vergl. Aicher 2000). Ein Verleimen der Plattenhälften A und B in diagonaler Lage der Faserrichtungen zueinander in einem Winkel von bis zu 45° erhöht die Festigkeiten der Platten nochmals deutlich insbesondere in Bezug auf den Rollschub (ist in den Fig. 14 und Fig. 15 nicht dargestellt). In dieser Art ausgeführte Platten genügen den höchsten Belastungsanforderungen und sind kostengünstig herstellbar.

Eine weitere Variante um höhere Festigkeiten der erfindungsgemäßen Platten zu erhalten ist die Möglichkeit die Platten in zwei Hälften C und D mittels Trennschnitt in der Schnittlinie 8 zu trennen wie in **Fig. 16** und **Fig. 17** dargestellt. Die aufgetrennten Plattenhälften C und D werden in der Schnittlinie 8 seitlich zu einander um die Hälfte der Lamellen 14 zueinander versetzt und mit einer Bindemittelschicht 6 fest miteinander verbunden. Solche versetzte Lamellen überdecken den Stumpfstoß 5 in den Lamellensträngen 4 innerhalb der Mittellage mit Stumpfstoß 3 und bilden qualitativ hochwertigere Plattenmittellagen für verbesserte Festigkeiten.

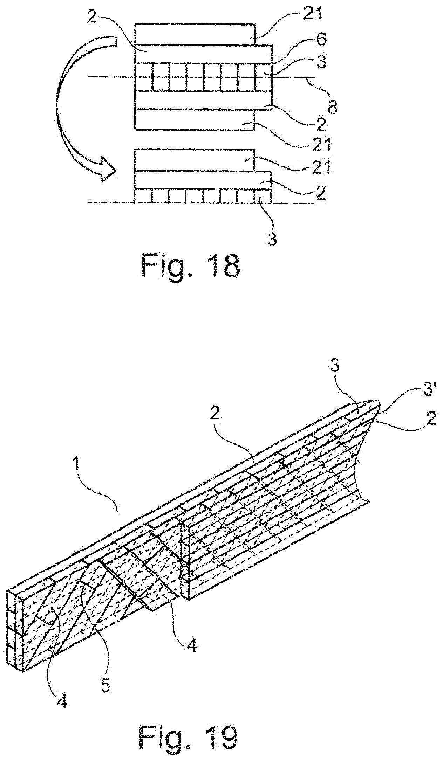

Die **Fig. 18** zeigt eine erfindungsgemäße Platte 1 wie bereits in **Fig. 1** und in **Fig. 8** beschrieben, bei der für die Weiterverarbeitung zu einem Parkettelement die Parkettdeckschichten 21, vorteilhaft bereits fest miteinander verbunden werden. Die Parkettdeckschicht 21 kann dabei bündig an einer Seite der erfindungsgemäße Platte 1 angelegt werden und eine geringere Breite gegenüber der erfindungsgemäßen Platte 1, wie dargestellt, aufweisen. Wenn das Parkettelement 21 nach dem Auftrennen mit Nut und Feder versehen wird, wird die Parkettdeckschicht 21 im Bereich der Feder nicht zerspant und dadurch Material eingespart. Der besondere Vorteil ergibt sich dahingehend, dass der Pressvorgang und das nachfolgende Auftrennen rationeller erfolgt. Dies stellt eine Variante in Fig. 8 erklärten Methode dar.

Die **Fig. 19** zeigt eine isometrische Darstellung der erfindungsgemäßen Platte mit Teilschnitten, um den neuartigen Aufbau der Platte, in den einzelnen Schichten zu verdeutlichen. Der Aufbau stellt eine 4-schichtige Platte dar, bei der die Mittellage aus zwei Schichten mit Stumpfstoß 3 und 3' gebildet werden. Die Platten werden untereinander mit einer Bindemittelschicht 6 fest miteinander verbunden und bilden dadurch das Bauelement, Platte 1. Die Lagen der Lamellenstränge 4 im Aufbau der Mittellagen sind dabei in einem Winkel a von 0° bis 90° angeordnet. Eine solche Mittelschicht aus zwei Lagen mit zwei Schichten von Decklagen mit Stumpfstoß erhöht die Festigkeit der Platte 1 erheblich, insbesondere in Bezug auf die Krafteinwirkungen in der Plattenebene. Dies erhöht die Rollschubfestigkeit (vergl. Aicher 2000). Solche Platten werden vorteilhaft in statisch belasteten Bauteilen, wie Träger oder Wand- und Deckenelementen eingesetzt. Um ausreichende Festigkeiten zu erzielen sind dabei die Decklagen mit Stumpfstoß 2 mit durchgehenden Lamellen kombiniert, um die erforderlichen Festigkeitswerte in den Deckschichten mit Stumpfstoß zu erreichen. Die Kombination von durchgehenden Lamellensträngen ist bereits in den Fig. 7 und Fig. 9 hinreichend erläutert. Die Stumpfstöße 5 ergeben innerhalb der Mittellagen keine Verringerung der Festigkeit, da diese durch die versetzten Lagen der Lamellenstränge 4 zueinander, durch die Bindemittelschichten 6 verbunden werden. Solche Schichten erweisen sich durch die Lagen in einem Winkel a zueinander, als außerordentlich stabil und genügen in hervorragender Weise den gewünschten statischen Eigenschaften. Die Lamellenstränge 4 können im übertragenen Sinn als Gitter betrachtet werden. Gitter in Tragwerken zeichnen sich durch hohe Festigkeiten und Steifigkeiten des Trägersystems aus. Besonders bei Beanspruchungen in der Plattenebene ist die Lage dieser versetzten Schichten, Mittellege mit Stumpfstoß 3 und 3' statisch optimal gelöst, zumal sie die Festigkeit in der neutralen Zone erhöhen. Bei statischen Beanspruchungen senkrecht zur Plattenebene erhöht sich durch die gitterförmige Lage der Lamellenstränge 4, ebenfalls die Festigkeit gegenüber von herkömmlichen dreischichtigen Aufbauten. Es sind aber durchaus Anwendungen möglich, bei denen weitere Schichten verwendet werden, um noch höhere Festigkeiten zu erzielen. Beispielsweise sechs oder sieben Schichten, um nur einige zu nennen. Die erzielte höhere Festigkeit führt zu einer Verringerung der Dicke der Mehrschichtplatten, beispielsweise Dreischichtplatten und spart Material ein, bei gleicher Festigkeit wie herkömmliche Dreischichtplatten.

## Patentansprüche

1. Verfahren zur Herstellung eines Holzbauelementes (1), umfassend die folgenden Schritte:
- es wird eine Mehrschichtplatte ausgebildet, wobei eine erste Schicht (2) der Platte aus zumindest teilweise miteinander mit einem Bindemittel (6) fest miteinander verbundenen Brettern (14) gebildet wird, wobei in der ersten Schicht (2) die Bretter (14) in Längsrichtung versetzt zueinander angeordnet und stumpf gestoßen zum in Längsrichtung angrenzenden Brett (14) angeordnet werden,
- wobei wenigstens eine zweite Schicht (3) auf der ersten Schicht (2) aufgesetzt und mit dieser mit einem Bindemittel (6) fest miteinander verbunden wird, die ebenfalls aus zumindest teilweise miteinander mit einem Bindemittel (6) fest miteinander verbundenen Brettern gebildet wird, wobei in der zweiten Schicht (3) die Bretter in Längsrichtung versetzt zueinander angeordnet und stumpf gestoßen zum in Längsrichtung angrenzenden Brett angeordnet werden und wobei die zweite Schicht (3) in Faserrichtung versetzt zur ersten Schicht (2) angeordnet ist, wobei
- weiter wenigstens eine dritte Schicht (2) auf der zweiten Schicht (3) aufgesetzt wird, so dass die zweite Schicht (3) zwischen der ersten Schicht (2) und der dritten Schicht (2) angeordnet ist, und mit dieser mit einem Bindemittel (6) fest miteinander verbunden wird, die ebenfalls aus zumindest teilweise miteinander mit einem Bindemittel (6) fest miteinander verbundenen Brettern (14) gebildet wird, wobei in der dritten Schicht (2) die Bretter (14) in Längsrichtung versetzt zueinander angeordnet und stumpf gestoßen zum in Längsrichtung angrenzenden Brett (14) angeordnet werden und wobei die zweite Schicht (3) in Faserrichtung einem Winkel von 0°-90° zur ersten Schicht (2) und der dritten Schicht (2) angeordnet ist, und wobei
- jede dieser Schichten (2, 3) aus stumpfgestoßenen Brettlagen besteht, **dadurch gekennzeichnet, dass**
- die Platte aus einem Block (15) derart erzeugt wird, dass der Block in Faserrichtung (13) anhand von Schnittlinien (18) zu Abschnitten aufgetrennt wird, wobei die Abschnitte die stumpfgestoßene Brettlage der zweiten Schicht (3) in Form einer Mittellage oder die stumpfgestoßene Brettlage der ersten und dritten Schicht (2) in Form von Decklagen bilden und je nach Schnittführung eine Dicke d aufweisen, wobei
- der Block (15) aus einem gepressten Block (15) ausgebildet wird, bei dem eine Anzahl von Lamellensträngen (4) eine Blockbreite ergibt, wobei bei den Lamellensträngen (4), die in Faserrichtung (13) hintereinandergelegt werden, Holzfehler weitestgehend in den einzelnen Lamellensträngen (4) verbleiben, wobei einzelne Lamellenstränge (4) mit einer Bindemittelschicht (6) verbunden werden, so dass die Holzfehler fixiert werden und sich keine Störungen beim Auftrennen oder Weiterverarbeiten ergeben können.

2. Verfahren nach Anspruch 1, **dadurch gekennzeichnet, dass** wenigstens bei einem benachbarten Schichtenpaar (2, 3) die jeweiligen Faserrichtungen senkrecht zueinander angeordnet sind.

3. Verfahren nach Anspruch 1 oder Anspruch 2, **dadurch gekennzeichnet, dass** das aus drei Lagen (2, 3) oder mehrschichtigen bestehende Holzbauelement (1) in der Mittelschicht (3) aufgetrennt wird.

4. Verfahren nach Anspruch 3, **dadurch gekennzeichnet, dass** die Auftrennung in Richtung der Faserrichtung erfolgt.

5. Verfahren nach einem der vorhergehenden Ansprüche, **dadurch gekennzeichnet, dass** die Bretter in der zweiten Schicht (3) bzw. in der Mittelschicht (3) andere Abmessungen haben als die Bretter (14) in den benachbarten Schichten (2).

6. Verfahren nach Anspruch 3 oder 4, **dadurch gekennzeichnet, dass** eine der Plattenhälften mit anderer Orientierung an der zweiten Plattenhälfte angeordnet und mittels einer Bindemittelschicht (6) fest miteinander verbunden wird.

7. Verfahren nach einem der vorhergehenden Ansprüche, **dadurch gekennzeichnet, dass** die Bretter vor der Stumpfstoßverleimung eine minimale Länge von 100 mm aufweisen.

8. Holzbauelement (1), wobei das Holzbauelement (1) als Mehrschichtplatte ausgebildet ist,
- wobei eine erste Schicht (2) der Platte aus zumindest teilweise miteinander mit einem Bindemittel (6) fest miteinander verbundenen Brettern (14) gebildet ist, wobei in der ersten Schicht (2) die Bretter (14) in Längsrichtung versetzt zueinander angeordnet und stumpf gestoßen zum in Längsrichtung angrenzenden Brett (14) angeordnet sind,
- wobei wenigstens eine zweite Schicht (3) auf der ersten Schicht (2) aufgesetzt und mit dieser mit einem Bindemittel (6) fest miteinander verbunden ist, die ebenfalls aus zumindest teilweise miteinander mit einem Bindemittel (6) fest miteinander verbundenen Brettern gebildet ist, wobei in der zweiten Schicht (3) die Bretter in Längsrichtung versetzt zueinander angeordnet und stumpf gestoßen zum in Längsrichtung angrenzenden Brett angeordnet sind und wobei die zweite Schicht (3) in Faserrichtung versetzt zur ersten Schicht (2) angeordnet ist, wobei
- weiter wenigstens eine dritte Schicht (2) auf der zweiten Schicht (3) aufgesetzt ist, so dass die zweite Schicht (3) zwischen der ersten Schicht (2) und der dritten Schicht (2) angeordnet ist, und mit dieser mit einem Bindemittel (6) fest miteinander verbunden ist, die ebenfalls aus zumindest teilweise miteinander mit einem Bindemittel (6) fest miteinander verbundenen Brettern (14) gebildet ist, wobei in der dritten Schicht (2) die Bretter (14) in Längsrichtung versetzt zueinander angeordnet und stumpf gestoßen zum in Längsrichtung angrenzenden Brett (14) angeordnet sind und wobei die zweite Schicht (3) in Faserrichtung einem Winkel von 0°-90° zur zweiten und dritten Schicht (2, 3) angeordnet ist, und wobei
- jede dieser Schichten (2, 3) aus stumpfgestoßenen Brettlagen besteht, **dadurch gekennzeichnet, dass**
- die aus einem Block (15) in Faserrichtung (13) anhand von Schnittlinien (18) zu Abschnitten aufgetrennte und daraus erzeugte Platte derart bereitgestellt ist, dass die stumpfgestoßene Brettlage der zweiten Schicht (3) in Form einer Mittellage oder die stumpfgestoßene Brettlage der ersten und dritten Schicht (2) in Form von Decklagen durch die Abschnitte gebildet ist und wobei die Abschnitte je nach Schnittführung eine Dicke d aufweisen, wobei
- der Block (15) aus einem gepressten Block (15) ausgebildet ist, bei dem eine Anzahl von Lamellensträngen (4) eine Blockbreite ergibt, wobei bei den Lamellensträngen (4), die in Faserrichtung (13) hintereinandergelegt sind, Holzfehler weitestgehend in den einzelnen Lamellensträngen (4) verbleiben, wobei einzelne Lamellenstränge (4) mit einer Bindemittelschicht (6) verbunden sind, so dass die Holzfehler fixiert sind und sich keine Störungen beim Auftrennen oder Weiterverarbeiten ergeben können.

9. Holzbauelement (1) nach Anspruch 8, **dadurch gekennzeichnet, dass** wenigstens bei einem benachbarten Schichtenpaar (2, 3) die jeweiligen Faserrichtungen senkrecht zueinander angeordnet sind.

10. Holzbauelement (1) nach Anspruch 8 oder Anspruch 9, **dadurch gekennzeichnet, dass** die Bretter in der zweiten Schicht (3) bzw. in der Mittelschicht (3) andere Abmessungen haben als die Bretter (14) in den benachbarten Schichten (2).

11. Holzbauelement (1) nach Anspruch 10, **dadurch gekennzeichnet, dass** die ehemalige Mittelschicht (3) aufgetrennt, insbesondere in Faserrichtung aufgetrennt ist, und eine der Plattenhälften mit anderer Orientierung an der zweiten Plattenhälfte angeordnet und mittels einer Bindemittelschicht (6) fest miteinander verbunden ist.

12. Holzbauelement (1) nach einem der Ansprüche 8 bis 11, **dadurch gekennzeichnet, dass** die Bretter vor der Stumpfstoßverleimung eine minimale Länge von 100 mm aufweisen.

13. Verwendung eines Holzbauelements (1) gemäß einem der Ansprüche 8 bis 12 und/oder erhalten aus einem Verfahren gemäß einem der Ansprüche 1 bis 7 zur Herstellung von Parkett, einer Holzwand, eines tragenden Holzträgers und/oder Holzständers für ein Gebäude und/oder einer Holzplatte.

## Claims

1. A method of producing a wooden construction element (1), comprising the following steps:
- a multilayer panel is formed, a first layer (2) of the panel being formed from boards (14) which are at least partially firmly connected to one another with a binding agent (6), the boards (14) in the first layer (2) being arranged offset to one another in the longitudinal direction and butt-jointed to the board (14) adjacent in the longitudinal direction,
- at least one second layer (3) being placed onto the first layer (2) and firmly connected thereto with a binding agent (6), said second layer also being formed from boards which are at least partially firmly connected to one another with a binding agent (6), the boards in the second layer (3) being arranged offset to one another in the longitudinal direction and butt-jointed to the board adjacent in the longitudinal direction, and the second layer (3) being arranged offset to the first layer (2) in the fiber direction, wherein
- further at least one third layer (2) is placed onto the second layer (3), so that the second layer (3) is arranged between the first layer (2) and the third layer (2) and is firmly connected to the latter with a binding agent (6), said third layer also being formed from boards (14) which are at least partially firmly connected to one another with a binding agent (6), the boards (14) in the third layer (2) being arranged offset to one another in the longitudinal direction and butt-jointed to the board (14) adjacent in the longitudinal direction, and the second layer (3) being arranged at an angle of 0°-90° relative to the first layer (2) and the third layer (2) in the fiber direction, and wherein
- each of these layers (2, 3) consists of butt-jointed board plies, **characterized in that**
- the board is produced from a block (15) in such a way that the block is separated into sections in the fiber direction (13) by means of cutting lines (18), the sections forming the butt-jointed board ply of the second layer (3) in the form of a middle layer or the butt-jointed board ply of the first and third layers (2) in the form of top layers and having a thickness d depending on the cutting direction, wherein
- the block (15) is formed from a pressed block (15), in which a number of lamella strands (4) produce a block width, wherein in the lamella strands (4), which are laid one behind the other in the fiber direction (13), wood defects remain largely in the individual lamella strands (4), and individual lamella strands (4) being interconnected with a binding agent layer (6), so that the wood defects are fixed and no faults can occur during separating or further processing.

2. The method according to claim 1, **characterized in that** at least in one adjacent pair of layers (2, 3) the respective fiber directions are arranged perpendicular to each other.

3. The method according to claim 1 or claim 2, **characterized in that** the wooden construction element (1) consisting of three layers (2, 3) or more layers is separated in the middle layer (3).

4. The method according to claim 3, **characterized in that** the separation takes place in the fiber direction.

5. The method according to any of the preceding claims, **characterized in that** the boards in the second layer (3) or in the middle layer (3) have dimensions which differ from those of the boards (14) in the adjacent layers (2).

6. The method according to claim 3 or 4, **characterized in that** one of the panel halves is arranged with a different orientation on the second panel half and is firmly connected thereto by means of a binding agent layer (6).

7. The method according to any of the preceding claims, **characterized in that** the boards have a minimum length of 100 mm before butt joint gluing.

8. A wooden construction element (1), wherein the wooden construction element (1) is designed as a multilayer panel,
- a first layer (2) of the panel being formed from boards (14) which are at least partially firmly connected to one another with a binding agent (6), the boards (14) in the first layer (2) being arranged offset to one another in the longitudinal direction and butt-jointed to the board (14) adjacent in the longitudinal direction,
- at least one second layer (3) being placed onto the first layer (2) and firmly connected thereto with a binding agent (6), said second layer also being formed from boards which are at least partially firmly connected to one another with a binding agent (6), the boards in the second layer (3) being arranged offset to one another in the longitudinal direction and butt-jointed to the board adjacent in the longitudinal direction, and the second layer (3) being arranged offset to the first layer (2) in the fiber direction, wherein
- further at least one third layer (2) is placed onto the second layer (3), so that the second layer (3) is arranged between the first layer (2) and the third layer (2) and is firmly connected to the latter with a binding agent (6), said third layer also being formed from boards (14) which are at least partially firmly connected to one another with a binding agent (6), the boards (14) in the third layer (2) being arranged offset to one another in the longitudinal direction and butt-jointed to the board (14) adjacent in the longitudinal direction, and the second layer (3) being arranged at an angle of 0°-90° relative to the first and third layers (2, 3) in the fiber direction, and wherein
- each of these layers (2, 3) consists of butt-jointed board plies, **characterized in that**
- the board which is separated into sections from a block (15) in the fiber direction (13) by means of cutting lines (18) and produced therefrom is provided in such a way that the butt-jointed board ply of the second layer (3) in the form of a middle layer or the butt-jointed board ply of the first and third layers (2) in the form of top layers is formed by the sections having a thickness d depending on the cutting direction, wherein
- the block (15) is formed from a pressed block (15), in which a number of lamella strands (4) produce a block width, wherein in the lamella strands (4), which are laid one behind the other in the fiber direction (13), wood defects remain largely in the individual lamella strands (4), and individual lamella strands (4) being interconnected with a binding agent layer (6), so that the wood defects are fixed and no faults can occur during separating or further processing.

9. The wooden construction element (1) according to claim 8, **characterized in that** at least in one adjacent pair of layers (2, 3) the respective fiber directions are arranged perpendicular to each other.

10. The wooden construction element (1) according to claim 8 or claim 9, **characterized in that** the boards in the second layer (3) or in the middle layer (3) have dimensions which differ from those of the boards (14) in the adjacent layers (2).

11. The wooden construction element (1) according to claim 10, **characterized in that** the former middle layer (3) is separated, in particular separated in the fiber direction, and one of the panel halves is arranged with a different orientation on the second panel half and is firmly connected thereto by means of a binding agent layer (6).

12. The wooden construction element (1) according to any of the claims 8 to 11, **characterized in that** the boards have a minimum length of 100 mm before butt joint gluing.

13. Use of a wooden construction element (1) according to any of the claims 8 to 12 and/or obtained by a method according to any of the claims 1 to 7 for the production of parquet flooring, a wooden wall, a load-bearing wooden beam and/or wooden stand for a building and/or a wooden panel.

## Revendications

1. Procédé de fabrication d'un élément de construction en bois (1), comprenant les étapes suivantes :
- réalisation d'une plaque multicouches, dans lequel une première couche (2) de la plaque est formée à partir de planches (14) reliées au moins en partie fixement entre elles à l'aide d'un moyen de jonction (6), dans lequel dans la première couche (2), les planches (14) sont disposées de façon décalée les unes par rapport aux autres dans la direction longitudinale et sont disposées de façon à être assemblées bout à bout par rapport à la planche (14) connexe dans la direction longitudinale ;
- dans lequel au moins une deuxième couche (3) est placée sur la première couche (2) et est reliée fixement à elle à l'aide d'un moyen de jonction (6), ladite première couche étant également formée à partir de planches reliées au moins en partie fixement entre elles à l'aide d'un moyen de jonction (6), dans lequel dans la deuxième couche (3), les planches sont disposées de façon décalée les unes par rapport aux autres dans la direction longitudinale et disposées de façon à être assemblées bout à bout en direction de la planche connexe dans la direction longitudinale et dans lequel la deuxième couche (3) est disposée dans le sens du fil du bois de façon décalée par rapport la première couche (2) ;
- dans lequel en outre au moins une troisième couche (2) est placée sur la deuxième couche (3), de sorte que la deuxième couche (3) soit disposée entre la première couche (2) et la troisième couche (2) et soit reliée fixement à elle à l'aide d'un moyen de jonction (6), ladite couche étant également formée à partir de planches (14) fixement reliées au moins en partie entre elles à l'aide d'un moyen de jonction (6), dans lequel dans la troisième couche (2), les planches (14) sont disposées de façon décalée les unes par rapport aux autres dans la direction longitudinale et sont disposées de façon à être assemblées bout à bout en direction de la planche (14) connexe dans la direction longitudinale et dans lequel la deuxième couche (3) est disposée dans le sens du fil du bois selon un angle de 0°-90° par rapport à la première couche (2) et à la troisième couche (2) ; et
- dans lequel chacune de ces couches (2, 3) se compose de couches de planche assemblées bout à bout ;
**caractérisé en ce que** :
- la plaque est produite d'un bloc (15), de sorte que le bloc est découpé en sections dans le sens du fil du bois (13) à l'aide de lignes de coupe (18), les sections comportant la couche de planche formant la deuxième couche (3) de façon assemblée bout à bout sous forme d'une couche moyenne ou formant la couche de planche assemblée bout à bout de la première et de la troisième couche (2) sous forme de couches de revêtement et présentant respectivement après découpe une épaisseur d ;
- dans lequel le bloc (15) est réalisé à partir d'un bloc compressé (15), dans lequel un certain nombre de tronçons de lamelles (4) donne une largeur de bloc, dans lequel pour les tronçons de lamelles (4) placés les uns derrière les autres dans le sens du fil du bois (13), les défauts du bois restent largement dans les tronçons de lamelles (4) individuels, les tronçons de lamelles (4) individuels étant reliés à une couche de moyen de jonction (6), de sorte que les défauts du bois sont localisés et ne peuvent pas causer de dommages lors de la découpe ou de la transformation.

2. Procédé selon la revendication 1, **caractérisé en ce qu'**au moins en cas de paire de couches connexes (2, 3), les sens du fil du bois sont disposés perpendiculairement les uns par rapport aux autres.

3. Procédé selon la revendication 1 ou 2, **caractérisé en ce que** l'élément de construction en bois (1) composé de trois couches (2, 3) ou de plusieurs couches est découpé dans la couche centrale (3).

4. Procédé selon la revendication 3, **caractérisé en ce que** la découpe se produit dans le sens du fil du bois.

5. Procédé selon l'une quelconque des revendications précédentes, **caractérisé en ce que** les planches placées dans la deuxième couche (3) et/ou dans la couche centrale (3) ont des dimensions différentes des planches (14) placées dans les couches (2) connexes.

6. Procédé selon la revendication 3 ou 4, **caractérisé en ce qu'**une des moitiés de plaque est disposée contre la deuxième moitié de plaque avec une orientation différente et que les deux moitiés sont reliées fixement entre elles à l'aide d'une couche de moyen de jonction (6).

7. Procédé selon l'une quelconque des revendications précédentes, **caractérisé en ce que** les planches présentent une longueur minimale de 100 mm avant le collage d'assemblage bout à bout.

8. Élément de construction en bois (1), dabs lequel l'élément de construction en bois (1) est réalisé sous la forme d'une plaque multicouches ;
- dans lequel une première couche (2) de la plaque est formée à partir de planches (14) reliées au moins en partie fixement entre elles à l'aide d'un moyen de jonction (6), dans lequel dans la première couche (2), les planches (14) sont disposées de façon décalée les unes par rapport aux autres dans la direction longitudinale et sont disposées de façon à être assemblées bout à bout par rapport à la planche (14) connexe dans la direction longitudinale ;
- dans lequel au moins une deuxième couche (3) est placée sur la première couche (2) et est reliée fixement à elle à l'aide d'un moyen de jonction (6), ladite première couche étant également formée à partir de planches reliées au moins en partie fixement entre elles à l'aide d'un moyen de jonction (6), dans lequel dans la deuxième couche (3), les planches sont disposées de façon décalée les unes par rapport aux autres dans la direction longitudinale et disposées de façon à être assemblées bout à bout en direction de la planche connexe dans la direction longitudinale et dans lequel la deuxième couche (3) est disposée dans le sens du fil du bois de façon décalée par rapport la première couche (2) ;
- dans lequel en outre au moins une troisième couche (2) est placée sur la deuxième couche (3), de sorte que la deuxième couche (3) soit disposée entre la première couche (2) et la troisième couche (2) et soit reliée fixement à elle à l'aide d'un moyen de jonction (6), ladite couche étant également formée à partir de planches (14) fixement reliées au moins en partie entre elles à l'aide d'un moyen de jonction (6), dans lequel dans la troisième couche (2), les planches (14) sont disposées de façon décalée les unes par rapport aux autres dans la direction longitudinale et sont disposées de façon à être assemblées bout à bout en direction de la planche (14) connexe dans la direction longitudinale et dans lequel la deuxième couche (3) est disposée dans le sens du fil du bois selon un angle de 0°-90° par rapport à la deuxième couche et la troisième couche (2, 3) ; et
- dans lequel chacune de ces couches (2, 3) se compose de couches de planche assemblées bout à bout ;
**caractérisé en ce que** :
- la plaque découpée en sections dans le sens du fil du bois (13) à l'aide de lignes de coupe (18) à partir d'un bloc (15) et ainsi produite est préparée de telle sorte que la couche de planche assemblée bout à bout de la deuxième couche (3) prend la forme d'une couche moyenne ou que la planche assemblée bout à bout de la première et de la troisième couche (2) est formée par les sections prenant la forme de couches de revêtement, dans lequel les sections présentent respectivement après découpe une épaisseur d ;
- dans lequel le bloc (15) est réalisé à partir d'un bloc compressé (15), dans lequel un certain nombre de tronçons de lamelles (4) donne une largeur de bloc, dans lequel pour les tronçons de lamelles (4) placés les uns derrière les autres dans le sens du fil du bois (13), les défauts du bois restent largement dans les tronçons de lamelles (4) individuels, les tronçons de lamelles (4) individuels étant reliés à une couche de moyen de jonction (6), de sorte que les défauts du bois sont localisés et ne peuvent pas causer de dommages lors de la découpe ou de la transformation.

9. Élément de construction en bois (1) selon la revendication 8, **caractérisé en ce qu'**au moins en cas de paire de couches connexes (2, 3), les sens du fil du bois sont disposés perpendiculairement les uns par rapport aux autres.

10. Élément de construction en bois (1) selon la revendication 8 ou 9, caractérisé en ce les planches placées dans la deuxième couche (3) et/ou dans la couche centrale (3) ont des dimensions différentes des planches (14) placées dans les couches (2) connexes.

11. Élément de construction en bois (1) selon la revendication 10, **caractérisé en ce que** l'ancienne couche centrale (3) est découpée, notamment découpée dans le sens du fil du bois, et qu'une des moitiés de plaque est disposée contre la deuxième moitié de plaque avec une orientation différente et que les deux moitiés sont reliées fixement entre elles à l'aide d'une couche de moyen de jonction (6).

12. Élément de construction en bois (1) selon l'une quelconque des revendications 8 à 11, **caractérisé en ce que** les planches présentent une longueur minimale de 100 mm avant le collage d'assemblage bout à bout.

13. Utilisation d'un élément de construction en bois (1) selon l'une quelconque des revendications 8 à 12 et/ou dudit élément obtenu à partir d'un procédé selon l'une quelconque des revendications 1 à 7, pour la fabrication d'un parquet, d'un lambris, d'une poutre en bois porteuse et/ou de boisements pour un bâtiment et/ou une plaque de bois.
